# EUROPEAN PATENT APPLICATION

(11) **EP 4 653 069 A1**
(43) Date of publication of application: **26.11.2025**
(21) Application number: 24775143.1
(22) Date of filing: 15.03.2024
(51) Int. Cl.: A63F 13/358, A63F 13/25, A63F 13/71, A63F 13/795, A63F 13/87, A63F 13/53

(54) **DISPLAY DEVICE AND OPERATING METHOD THEREOF**

(30) Priority: 17.03.2023 KR 20230035393
(71) Applicant: Samsung Electronics Co., Ltd., Suwon-si, Gyeonggi-do 16677 (KR)
(72) Inventor: SHIN, Yongwoo, Suwon-si, Gyeonggi-do 16677 (KR)
(74) Representative: Appleyard Lees IP LLP
(86) International application number: PCT/KR2024/003311
(87) International publication number: WO 2024/196095

(57) **Abstract**

Provided are a display device and an operating method thereof. A first display device controls a communication interface to transmit a request to execute a game application to a game server and receive a game screen according to the execution of the game application from the game server, controls a display to display the game screen, controls the communication interface to transmit the game screen to a second display device corresponding to a second user by communicating with the second display device according to an input of designating the second user, receives a control signal for controlling the game application from the second display device, and transmits the received control signal to the game server for the game server to control the game application, based on the control signal, and receives a game screen corresponding to a result of controlling the game application from the game server.

## Description

### TECHNICAL FIELD

The disclosure relates to a display device and an operating method thereof, and for example, to a display device for receiving a cloud game through streaming, and an operating method thereof.

### BACKGROUND ART

Recently, the number of game users has increased and there is a growing demand to enjoy game content on a large-screen television (TV) for immersion in games.

A cloud game refers to an online game enjoyed through a remote server on the Internet without a player having to download or install a game on his/her device. In the cloud game, the game is executed on the server and the server streams a video screen corresponding to the executed game to the device of the player, and thus, the player is able to play a high-quality game without having to own a high-performance computer or console. In the cloud game, the player may transmit a command including a user input to the remote server using a controller, a mouse, a keyboard, or another input device, and the remote server may process the command and transmit, in real time, a video output according to a result of processing the command again to the device of the player.

### DESCRIPTION OF EMBODIMENTS

### SOLUTION TO PROBLEM

According to an example embodiment of the disclosure, a first display device may include: a communication interface including communication circuitry, a memory storing one or more instructions, and at least one processor, comprising processing circuitry, individually and/or collectively, configured to execute the one or more instructions stored in the memory.

At least one processor, individually and/or collectively, may be configured to control the communication interface to transmit a request to execute a game application to a game server and receive a game screen according to the execution of the game application from the game server.

At least one processor, individually and/or collectively, may be configured to control a display to display the game screen.

At least one processor, individually and/or collectively, may be configured to control the communication interface to, according to an input designating a second user, transmit the game screen to a second display device corresponding to the second user by communicating with the second display device.

At least one processor, individually and/or collectively, may be configured to receive a control signal for controlling the game application from the second display device.

At least one processor, individually and/or collectively, may be configured to control the communication interface to: transmit the received control signal to the game server such that the game server controls the game application, based on the control signal, and receive a game screen corresponding to a result of controlling the game application from the game server.

According to an example embodiment of the disclosure, a method of operating a first display device may include: receiving, from a game server, a game screen according to execution of a game application, in response to a request to execute the game application being transmitted to the game server.

The method may include transmitting the game screen to a second display device corresponding to the second user by communicating with the second display device, according to an input designating the second user.

The method may include receiving a control signal for controlling the game application from the second display device.

The method may include transmitting the received control signal to the game server and receiving, from the game server, a game screen obtained by executing the game application, based on the control signal.

According to an example embodiment of the disclosure, a non-transitory computer-readable recording medium has recorded thereon one or more instructions executable by at least one processor of a display device to implement an operating method of a first display device, wherein the operating method may include: receiving, from a game server, a game screen according to execution of a game application, in response to a request to execute the game application being transmitted to the game server, displaying the game screen, transmitting the game screen to a second display device corresponding to the second user by communicating with the second display device, according to an input designating the second user, receiving a control signal for controlling the game application from the second display device, and transmitting the received control signal to the game server and receiving, from the game server, a game screen obtained by executing the game application, based on the control signal.

### BRIEF DESCRIPTION OF THE DRAWINGS

The above and other aspects, features and advantages of certain embodiments of the present disclosure will be more apparent from the following detailed description, taken in conjunction with the accompanying drawings, in which:
FIG. 1 is a diagram illustrating an example configuration of a system in which servers and display devices are connected to each other through a communication network, according to various embodiments;
FIG. 2 is a block diagram illustrating an example configuration of display devices, servers, and controllers, according to various embodiments;
FIG. 3 is a block diagram illustrating an example configuration of a display device according to various embodiments;
FIG. 4 is a flowchart illustrating an example method of operating a first display device, according to various embodiments;
FIG. 5 is a flowchart illustrating an example method of operating a second display device, according to various embodiments;
FIG. 6 is a flowchart illustrating an example method of operating a service server, according to various embodiments;
FIG. 7 is a signal flow diagram illustrating an example method by which a first display device displays a game screen by requesting a game server to execute a game application, according to various embodiments;
FIG. 8 is a signal flow diagram illustrating an example method by which a first user enables a second user participate in a game being played by a first user, using a friend invitation function, according to various embodiments;
FIG. 9 is a diagram illustrating an example of a quick panel according to various embodiments;
FIG. 10 is a diagram illustrating an example of a user interface of a first display device for displaying an authentication number and a user interface of a second display device for receiving the authentication number, according to various embodiments;
FIG. 11 is a diagram illustrating an example of displaying a friend list on a first display device and a second display device, according to various embodiments;
FIG. 12 is a signal flow diagram illustrating an example method of enabling a second user participate in game play after a second display device is authenticated, according to various embodiments;
FIG. 13 is a diagram illustrating example screen sharing between a first display device and a second display device, according to various embodiments;
FIG. 14 is a signal flow diagram illustrating an example method by which a first display device invites a second user participate in a game being played by a first user, using a friend list, according to various embodiments;
FIG. 15 is a diagram illustrating an example of a game together request popup window, according to various embodiments;
FIG. 16 is a diagram illustrating an example method of processing a format of a control signal, according to various embodiments;
FIG. 17 is a diagram illustrating an example control signal format conversion table according to various embodiments;
FIG. 18 is a signal flow diagram illustrating an example method of processing a format of a control signal, according to various embodiments;
FIG. 19 is a diagram illustrating example game control authority according to various embodiments;
FIG. 20 is a diagram illustrating an example video chatting/voice chatting function according to various embodiments;
FIG. 21 is a diagram illustrating an example voice call performed between users using a voice chatting function while playing a game using a game together function, according to various embodiments;
FIG. 22 is a diagram illustrating an example voice call performed between users using a video chatting function while playing a game using a game together function, according to various embodiments;
FIG. 23 is a diagram illustrating an example method of playing a game between a first display device and a second display device using a Wi-Fi direct technology, according to various embodiments;
FIG. 24 is a diagram illustrating an example method of transmitting a screen of a game being executed in a game server directly to a second display device and transmitting a control signal of the second display device directly to the game server, according to various embodiments;
FIG. 25 is a signal flow diagram illustrating an example method of terminating a game together function, according to various embodiments;
FIG. 26 is a diagram illustrating example game screen sharing termination between a first display device and a second display device, according to various embodiments; and
FIG. 27 is a diagram illustrating example game screen sharing termination between a first display device and a second display device, according to various embodiments.

### MODE OF DISCLOSURE

The terms used in the disclosure will be briefly defined, and the disclosure will be described in greater detail with reference to the drawings.

All terms including descriptive or technical terms which are used herein should be construed as having meanings that are apparent to one of ordinary skill in the art. However, the terms may have different meanings according to the intention of one of ordinary skill in the art, precedent cases, or the appearance of new technologies. Also, some terms may be arbitrarily selected, and in this case, the meaning of the selected terms will be described in detail in the detailed description of the disclosure. Thus, the terms used herein are to be defined based on the meaning of the terms together with the description throughout the disclosure.

When a part "includes" or "comprises" an element, unless there is a particular description contrary thereto, the part may further include other elements, not excluding the other elements. In addition, terms such as "unit", "-or/-er", and "module" described in the disclosure may refer, for example, to a unit that processes at least one function or operation, which may be implemented in hardware or software, or implemented in a combination of hardware and software.

Throughout the disclosure, the expression "at least one of a, b or c" indicates only a, only b, only c, both a and b, both a and c, both b and c, all of a, b, and c, or variations thereof.

Hereinafter, various example embodiments of the disclosure will be described in greater detail with reference to the accompanying drawings. However, the disclosure may be implemented in various different forms and is not limited to any specific embodiment of the disclosure described herein. Also, in the drawings, parts irrelevant to the description may be omitted in order to clearly describe the disclosure, and like reference numerals designate like elements throughout the disclosure.

In an embodiment of the disclosure, the term "user" denotes a person who controls functions or operations of a computing device or an electronic device using a control device, and may include a viewer, a manager, or an installation engineer.

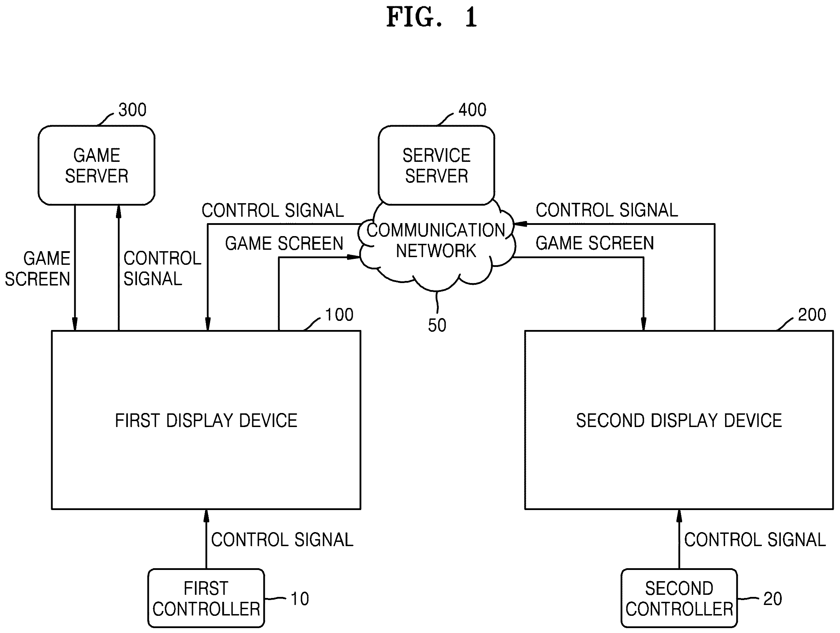

FIG. 1 is a diagram illustrating an example configuration of a system in which servers and display devices are connected to each other through a communication network, according to various embodiments.

Referring to FIG. 1, the system may include a first display device 100, a second display device 200, a game server 300, a service server 400, a first controller 10, and a second controller 20.

The first display device 100 may display content according to a request of a user. For example, the first display device 100 may transmit, to the game server 300, a request to execute a game application, and when the game server 300 transmits, to the first display device 100, a game screen obtained as a result of executing the game application, the first display device 100 may display, on a display, the game screen received from the game server 300.

The first controller 10 may refer, for example, to a device configured to transmit a control signal for controlling the execution of the game application to the first display device 100. The first controller 10 may provide the control signal of a format pre-determined according to the game server 300 or according to the game application executed by the game server 300. The control signal provided to the first display device 100 by the first controller 10 may be referred to as a first control signal or a first type control signal. The first display device 100 may change the control signal received from the first controller 10 to the control signal of the format pre-determined according to the game server 300 or according to the game application executed by the game server 300.

The game server 300 may receive, from the first display device 100, the request to execute the game application, execute the game application requested to be executed, and provide, to the first display device 100, the game screen obtained as the result of executing the game application. When the control signal for controlling the execution of the game application is received from the first display device 100, the game server 300 may execute the game application using the control signal and provide, to the first display device 100, the game screen obtained as the result of executing the game application.

While playing a game using a cloud game application provided from the game server 300 using the first display device 100, a user (hereinafter, a first user) of the first display device 100 may want to invite another user participate in the game being played by him/herself according to various reasons. For example, when the first user faces a difficult part in the game being played or a part determined to be difficult to play with his/her ability, the first user may want to smoothly play the game by letting the other user to play the part. For example, when a cloud game to be played by the first user is a game in which a plurality of users participate according to presence of a plurality of characters, the first user may want to invite the other user participate. According to an embodiment of the disclosure, provided is a method by which the first user using the first display device 100 invites (or enables) a second user using the second display device 200 to participate in a game in such a situation.

The second display device 200 may also refer, for example, to a device configured to perform same functions and roles as the first display device 100. However, for convenience of description of an embodiment of the disclosure, the term "second display device" may be used to be distinguished from a first display device. According to an embodiment of the disclosure, the first display device 100 denotes a device configured to directly communicate with the game server 300 to execute the game application, and the second display device 200 denotes a device configured to receive the game screen from the first display device 100 and provide the control signal for controlling the execution of the game application, according to a request of the first display device 100.

The second controller 20 may refer, for example, to a device configured to transmit the control signal for controlling the execution of the game application to the second display device 200. The control signal provided to the second display device 200 by the second controller 20 may be referred to as a second control signal or a second type control signal. The second control signal may have a same format as the first control signal or have a different format from the first control signal. For example, when the first controller 10 and the second controller 20 are same devices or compatible devices, the first control signal and the second control signal may have a same format. For example, when the first controller 10 and the second control signal 20 are products manufactured by different manufacturers, the first control signal and the second control signal may have different formats.

The service server 400 may connect communication between the first display device 100 and the second display device 200, and transfer data transmitted/received therebetween. For example, the service server 400 may be operated by a manufacturer of the first display device 100.

The first display device 100, the second display device 200, the game server 300, and the service server 400 may operate as below for the first user using the first display device 100 to invite or enable (as used herein, the terms "make", "invite" and "enable" may be used interchangeably to refer to allowing, designating, inviting, or the like, a user to participate in a game) the second user using the second display device 200 participate in the game.

According to an embodiment of the disclosure, when the first display device 100 receives a user input for making the second user participate in game play while receiving the game screen from the game server 300 and displaying the same, the first display device 100 may transmit the game screen to the second display device 200 through a communication network 50.

According to an embodiment of the disclosure, the first display device 100 may transmit the game screen to the second display device 200 through the service server 400. The first display device 100 may transmit the game screen to the service server 400 and the service server 400 may transmit the game screen to the second display device 200.

According to an embodiment of the disclosure, the first display device 100 may directly transmit the game screen to the second display device 200 using a short-range communication network or the like, without intermediation of the service server 400.

According to an embodiment of the disclosure, the second display device 200 may display, on a display, the game screen received from the first display device 100, and accordingly receive, from the second controller 20, the control signal for controlling the execution of the game application.

According to an embodiment of the disclosure, the second display device 200 may transmit the control signal from the second controller 20 to the first display device 100 directly or through the service server 400.

According to an embodiment of the disclosure, the first display device 100 may transmit, to the game server 300, the control signal received from the second display device 200. The game server 300 may execute the game application, based on the received control signal, and provide the game screen obtained as the result of the execution to the first display device 100. Through such operations, the first user may invite the second user participate in the game being played by him/herself.

According to an embodiment of the disclosure, when the control signal of the first display device 100 (hereinafter, the control signal of the first display device 100 denotes a control signal from the first controller 10) and the control signal of the second display device 200 (hereinafter, the control signal of the second display device 200 denotes a control signal of the second controller 20) have a same format or are compatible, the first display device 100 may provide the control signal from the second display device 200 as is to the game server 300. When the control signal of the first display device 100 and the control signal of the second display device 200 have different formats or are not compatible, the format of the control signal of the second display device 200 may need to be converted into the format of the control signal of the first display device 100 so as to be executable by the game server 300.

According to an embodiment of the disclosure, when the control signal of the first display device 100 and the control signal of the second display device 200 have different formats or are not compatible, the first display device 100 may convert the format of the control signal of the second display device 200 into the format of the control signal of the first display device 100.

According to an embodiment of the disclosure, when the control signal of the first display device 100 and the control signal of the second display device 200 have different formats or are not compatible, the second display device 200 may convert the format of the control signal into the format of the control signal of the first display device 100 and provide the same to the service server 400.

According to an embodiment of the disclosure, when the control signal of the first display device 100 and the control signal of the second display device 200 have different formats or are not compatible, the service server 400 may convert the format of the control signal into the format of the control signal of the first display device 100 and provide the same to the first display device 100.

According to an embodiment of the disclosure, the first display device 100 may transmit, to the second display device 200, a universal resource locator (URL) enabling an execution result screen of the game application received from the first display device 100 to be directly accessible, and accordingly, the second display device 200 may directly receive, from the game server 300, the execution result screen of the game application by accessing the game server 300 directly without through the first display device 100. Here, the second display device 200 may directly transmit the control signal to the game server 300.

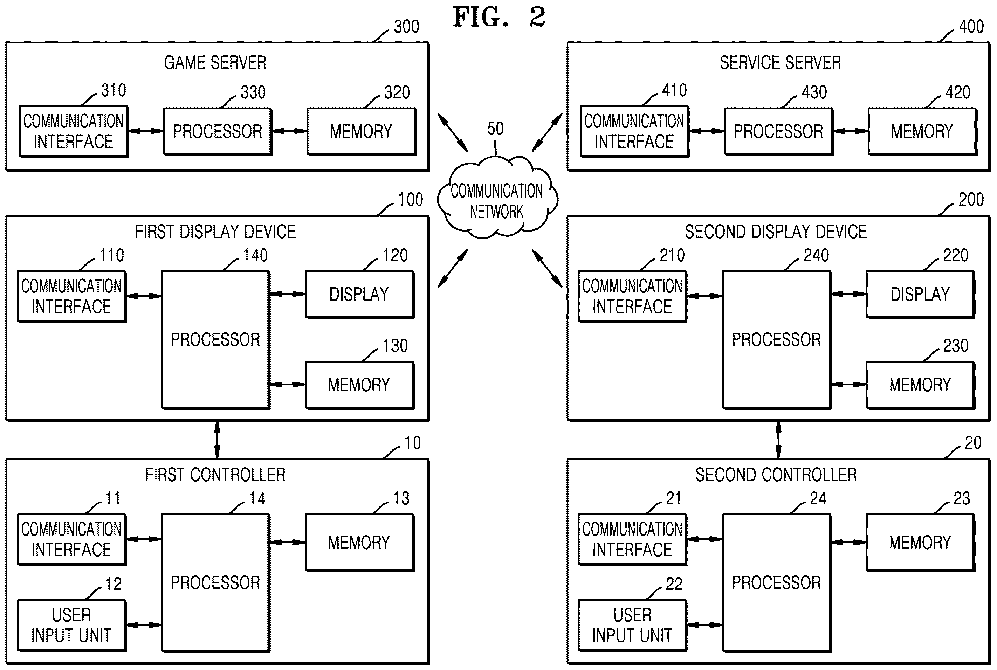

FIG. 2 is a block diagram illustrating an example configuration of display devices, servers, and controllers, according to various embodiments.

Referring to FIG. 2, a system may include the first display device 100, the first controller 10, and the game server 300, which are connected to each other through the communication network 50.

The first display device 100 is a device configured to display an image or data according to a request of a user, and may include a communication interface (e.g., including communication circuitry) 110, a display 120, a memory 130, and a processor (e.g., including processing circuitry) 140.

The communication interface 110 may include various communication circuitry included in one or more modules enabling wireless communication between the first display device 100 and a wireless communication system or between the first display device 100 and another device. The communication interface 110 may include one or more communication circuits. According to an embodiment of the disclosure, the communication interface 110 may perform communication with the first controller 10 according to a short-range communication technology. The short-range communication technology may include, for example, Bluetooth communication, Wi-Fi communication, and infrared communication. According to an embodiment of the disclosure, the communication interface 110 may perform communication with the game server 300 or the service server 400 according to an Internet protocol.

The display 120 may output an image or data processed by the first display device 100. According to an embodiment of the disclosure, the display 120 may display a game screen received from the game server 300.

The memory 130 may store programs for processes and controls by the processor 140 and may store data input to or output from the first display device 100. Also, the memory 130 may store pieces of data required for operations of the first display device 100.

The memory 130 may include at least one type of storage medium among a flash memory type, a hard disk type, a multimedia card micro type, a card type memory (for example, a secure digital (SD) or extreme digital (XD) memory), random access memory (RAM), static RAM (SRAM), read-only memory (ROM), electrically erasable programmable ROM (EEPROM), programmable ROM (PROM), a magnetic memory, a magnetic disk, and an optical disk.

The processor 140 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

The processor 140 may, for example, control all operations of the first display device 100. The processor 140 may include one or more processing circuits. For example, the processor 140 may perform functions of the first display device 100 described in the disclosure by executing one or more instructions stored in the memory 130.

According to an embodiment of the disclosure, the processor 140 may store one or more instructions in a memory provided therein, and control operations of the first display device 100 to be performed by executing the one or more instructions stored in the memory provided therein. In other words, the processor 140 may perform a specified operation by executing a program or at least one instruction stored in the memory 130 or in the memory provided in the processor 140.

According to an embodiment of the disclosure, the processor 140 may execute the one or more instructions stored in the memory 130 to transmit a request to execute a game application to the game server 300, receive a game screen according to the execution of the game application from the game server 300, and display the game screen on the display 120.

According to an embodiment of the disclosure, the processor 140 may execute the at least one instruction stored in the memory 130 to transmit the game screen to the second display device 200 corresponding to a second user by communicating with the second display device 200 according to an input of designating the second user, and receive a control signal for controlling the game application from the second display device 200.

According to an embodiment of the disclosure, the processor 140 may execute the at least one instruction stored in the memory 130 to transmit, to the game server 300, the control signal received from the second display device 200, and receive, from the game server 300, the game screen obtained by executing the game application, based on the control signal.

According to an embodiment of the disclosure, the processor 140 may execute the at least one instruction stored in the memory 130 to provide a graphical user interface including an invitation function or a friend list and enable the user to designate the second user whom the user wants to play a game together.

According to an embodiment of the disclosure, the processor 140 may execute the at least one instruction stored in the memory 130 to perform communication with the second display device 200 through the service server 400, transmit the game screen to the second display device 200 through the service server 400, and receive a control signal from the second display device 200 through the service server 400.

According to an embodiment of the disclosure, the processor 140 may execute the at least one instruction stored in the memory 130 to perform a direct communication connection with the second display device 200 to directly transmit the game screen to the second display device 200 and directly receive the control signal from the second display device 200.

According to an embodiment of the disclosure, the processor 140 may execute the at least one instruction stored in the memory 130 to identify whether a format of the control signal received from the second display device 200 is compatible with a format of the control signal of the first display device 100, transmit the control signal of the second display device 200 to the game server 300 as is, based on identifying that the format of the control signal of the second display device 200 is compatible with the format of the control signal of the first display device 100, and convert the format of the control signal of the second display device 200 into the format of the control signal of the first display device 100 and transmit the format-converted control signal to the game server 300, based on identifying that the format of the control signal of the second display device 200 is not compatible with the format of the control signal of the first display device 100. The first display device 100 may be any type of device that performs a function by including a processor and a memory. The first display device 100 may be a fixed type or a portable type device. For example, the first display device 100 may be a device for displaying image content, video content, game content, graphic content, or the like by including a display. The first display device 100 may output or display an image or content received from the game server 300. The first display device 100 may include any type of electronic device capable of receiving an outputting content, for example, a television (TV) such as a network television (TV), a smart TV, an Internet TV, a web TV, or an internet protocol (IP) TV, a computer such as a desktop computer, a laptop computer, or a tablet computer, or a smart device such as a smartphone, a cellular phone, a game player, a music player, a vide player, a medical device, or a home appliance. The first display device 100 is referred to as a display device in that content is received and displayed, and may also be referred to as a content receiving device, a sync device, an electronic device, or a computing device.

The block diagram of the first display device 100 shown in FIG. 2 is a block diagram according to various example embodiments. The components of the block diagram may be integrated, a component may be added, or the component may be omitted according to the specification of the first display device 100. For example, two or more components may be integrated into one component or one component may be divided into two or more components when necessary. Also, a function performed by each block is only for describing an embodiment of the disclosure and specific operations or devices do not limit the scope of right of the disclosure.

Hereinafter, the first controller 10 will be described.

The first controller 10 may include a communication interface (e.g., including communication circuitry) 11, a user input unit (e.g., including input circuitry) 12, a memory 13, and a processor (e.g., including processing circuitry) 14. However, the first controller 10 may include more or fewer components than illustrated components, and is not limited to the above example. The term "controller" may be used to control a display device, and may also be referred to as a control device, a remote control device, or an electronic device.

The communication interface 11 may include various communication circuitry included in one or more modules enabling wireless communication between the first controller 10 and the wireless communication system or between the first controller 10 and another device. The communication interface 11 may include one or more communication circuits. According to an embodiment of the disclosure, the communication interface 11 may perform communication with the first display device 100 according to a short-range communication technology. The short-range communication technology may include, for example, Bluetooth communication, Wi-Fi communication, and infrared communication. According to an embodiment of the disclosure, the communication interface 11 may perform communication with the game server 300 according to an Internet protocol.

The user input unit 12 may include various circuitry and may be any type of interface capable of receiving a user input. For example, the user input unit 12 may include a manipulation button for receiving an input of the user by being arranged in a portion of the first controller 10, a touch sensitive display configured to detect a touch input, and a microphone for receiving a speech utterance input of the user.

The memory 13 may store programs for processes and controls by the processor 14 and may store data input to or output from the first controller 10.

The memory 13 may include at least one type of storage medium among a flash memory type, a hard disk type, a multimedia card micro type, a card type memory (for example, a secure digital (SD) or extreme digital (XD) memory), random access memory (RAM), static RAM (SRAM), read-only memory (ROM), electrically erasable programmable ROM (EEPROM), programmable ROM (PROM), a magnetic memory, a magnetic disk, and an optical disk.

The processor 14 controls all operations of the first controller 10. The processor 14 may include one or more processing circuits. For example, the processor 14 may perform functions of the first controller 10 described in the disclosure by executing one or more instructions stored in the memory 13. As noted above the processor 14 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

According to an embodiment of the disclosure, the processor 14 may store one or more instructions in a memory provided therein, and control the above-described operations to be performed by executing the one or more instructions stored in the memory provided therein. In other words, the processor 14 may perform a specified operation by executing a program or at least one instruction stored in the memory 13 or in the memory provided in the processor 14.

According to an embodiment of the disclosure, the processor 14 may execute the one or more instructions stored in the memory 13 to perform a communication connection to the first display device 100 using a short-range wireless communication technology. The short-range wireless communication technology may include a Bluetooth communication technology or a Wi-Fi direct technology.

According to an embodiment of the disclosure, the processor 14 may execute the one or more instructions stored in the memory 13 to receive, from the first display device 100, information for connecting to the game server 300, and connect to the game server 300 using the received information for connecting to the game server 300. For example, the information for connecting to the game server 300 is a URL for accessing the game server 300 or user account information for connecting to the game server 300, and may include a user ID or a password.

According to an embodiment of the disclosure, the processor 14 may execute the one or more instructions stored in the memory 13 to transmit, to the first display device 100, an input signal corresponding to a user input received through the user input unit 12.

The first controller 10 may be any type of device that performs a function by including a processor and a memory. The first controller 10 may include various electronic devices such as a remote controller, a game controller, and a smartphone.

Meanwhile, the block diagram of the first controller 10 shown in FIG. 2 is a block diagram according to various example embodiments. The components of the block diagram may be integrated, a component may be added, or the component may be omitted according to the specification of the first controller 10. For example, two or more components may be integrated into one component or one component may be divided into two or more components when necessary. Also, a function performed by each block is only for describing an embodiment of the disclosure and specific operations or devices do not limit the scope of right of the disclosure.

Hereinafter, the game server 300 will be described.

The game server 300 may include a communication interface (e.g., including communication circuitry) 310, a memory 320, and a processor (e.g., including processing circuitry) 330. However, the game server 300 may include more or fewer components than illustrated components, and is not limited to the above example. For example, the game server 300 may include a separate image processor for processing an image of an application executed by the game server 300.

The communication interface 310 may include various communication circuitry included in one or more modules enabling wireless communication between the game server 300 and the wireless communication system or between the game server 300 and another device. The communication interface 310 may include one or more communication circuits. According to an embodiment of the disclosure, the communication interface 310 may perform communication with the first display device 100 according to an Internet protocol. According to an embodiment of the disclosure, the communication interface 310 may perform communication with the first controller 10 according to an Internet protocol.

The memory 320 may store programs for processes and controls by the processor 330 and may store data input to or output from the game server 300.

The memory 320 may include at least one type of storage medium among a flash memory type, a hard disk type, a multimedia card micro type, a card type memory (for example, a secure digital (SD) or extreme digital (XD) memory), random access memory (RAM), static RAM (SRAM), read-only memory (ROM), electrically erasable programmable ROM (EEPROM), programmable ROM (PROM), a magnetic memory, a magnetic disk, and an optical disk.

The processor 330 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions. The processor 330 may, for example, control all operations of the game server 300. The processor 330 may include one or more processing circuits. For example, the processor 330 may perform functions of the game server 300 described in the disclosure by executing one or more instructions stored in the memory 320.

According to an embodiment of the disclosure, the processor 330 may store one or more instructions in a memory provided therein, and control the above-described operations to be performed by executing the one or more instructions stored in the memory provided therein. In other words, the processor 330 may perform a specified operation by executing a program or at least one instruction stored in the memory 320 or in the memory provided in the processor 330.

According to an embodiment of the disclosure, the processor 330 may execute the one or more instructions stored in the memory 320 to receive, from the first display device 100, the request to execute the game application, and transmit, to the first display device 100, the game screen obtained as the result of executing the game application requested to be executed.

According to an embodiment of the disclosure, the processor 330 may execute the one or more instructions stored in the memory 320 to execute the game application, on the basis of the control signal for controlling the game application, received from the first display device 100, and transmit the game screen obtained as the result of execution to the first display device 100.

According to an embodiment of the disclosure, the processor 330 may execute the one or more instructions stored in the memory 320 to transmit the game screen to the second display device 200 upon receiving, from the second display device 200, a request to transmit the game screen.

According to an embodiment of the disclosure, the processor 330 may execute the one or more instructions stored in the memory 320 to execute the game application, on the basis of the control signal for controlling the game application, received from the second display device 200, and transmit the game screen obtained as the result of execution to the second display device 200.

Hereinafter, the service server 400 will be described.

The service server 400 may include a communication interface (e.g., including communication circuitry) 410, a memory 420, and a processor (e.g., including processing circuitry) 430. However, the service server 400 may include more or fewer components than illustrated components, and is not limited to the above example. For example, the service server 400 may include a separate image processor for processing an image of an application executed by the service server 400.

The communication interface 410 may include various communication circuitry included in one or more modules enabling wireless communication between the service server 400 and the wireless communication system or between the service server 400 and another device. According to an embodiment of the disclosure, the communication interface 410 may perform communication with the first display device 100 and the second display device 200 according to an Internet protocol.

The memory 420 may store programs for processes and controls by the processor 430 and may store data input to or output from the service server 400.

The memory 420 may include at least one type of storage medium among a flash memory type, a hard disk type, a multimedia card micro type, a card type memory (for example, a secure digital (SD) or extreme digital (XD) memory), random access memory (RAM), static RAM (SRAM), read-only memory (ROM), electrically erasable programmable ROM (EEPROM), programmable ROM (PROM), a magnetic memory, a magnetic disk, and an optical disk.

The processor 430 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions. The processor 430 may, for example, control all operations of the service server 400. For example, the processor 430 may perform functions of the service server 400 described in the disclosure by executing one or more instructions stored in the memory 420.

According to an embodiment of the disclosure, the processor 430 may store one or more instructions in a memory provided therein, and control the above-described operations to be performed by executing the one or more instructions stored in the memory provided therein. In other words, the processor 430 may perform a specified operation by executing a program or at least one instruction stored in the memory 420 or in the memory provided in the processor 430.

According to an embodiment of the disclosure, the processor 430 may execute the one or more instructions stored in the memory 420 to generate a friend connection relationship between the first user of the first display device 100 and the second user of the second display device 200 according to a request of the first display device 100.

According to an embodiment of the disclosure, the processor 430 may execute the one or more instructions stored in the memory 420 to generate an authentication number to be used for friend authentication upon receiving a friend invitation request of the first display device 100 and transmit the generated authentication number to the first display device 100.

According to an embodiment of the disclosure, the processor 430 may execute the one or more instructions stored in the memory 420 to receive, from the second display device 200, the authentication number together with a join request to join a friend invitation, authenticate the second user, based on identifying that the received authentication number matches the authentication number generated by the service server 400, and generate the friend connection relationship between the first user of the first display device 100 and the second user of the second display device 200, based on identifying the authentication of the second user.

According to an embodiment of the disclosure, the processor 430 may execute the one or more instructions stored in the memory 420 to receive the game screen from the first display device 100 of the first user according to the generation of the friend connection relationship between the first user and the second user, and transmit the received game screen to the second display device 200 of the second user.

According to an embodiment of the disclosure, the processor 430 may execute the one or more instructions stored in the memory 420 to receive, from the second display device 200, the control signal for controlling the game application, and transmit the received control signal to the first display device 100.

According to an embodiment of the disclosure, the processor 430 may execute the one or more instructions stored in the memory 420 to, when the format of the control signal received from the second display device 200 is different from the format of the control signal of the first display device 100, convert the format of the control signal of the second display device 200 into the format of the control signal of the first display device 100, and transmit the format-converted control signal to the first display device 100.

Hereinafter, the second display device 200 will be described.

The second display device 200 is a device configured to display an image or data according to a request of a user, and may include a communication interface (e.g., including communication circuitry) 210, a display 220, a memory 230, and a processor (e.g., including processing circuitry) 240. Functions of the communication interface 210, the display 220, the memory 230, and the processor 240 are similar to the functions of the communication interface 110, the display 120, the memory 130, and the processor 140 of the first display device 100, and thus redundant descriptions may not be repeated.

The communication interface 210 may include various communication circuitry included in one or more modules enabling wireless communication between the second display device 200 and the wireless communication system or between the second display device 200 and another device. According to an embodiment of the disclosure, the communication interface 210 may perform communication with the second controller 20 according to a short-range communication technology. The short-range communication technology may include, for example, Bluetooth communication, Wi-Fi communication, and infrared communication. According to an embodiment of the disclosure, the communication interface 210 may perform communication with the game server 300 or the service server 400 according to an Internet protocol.

The display 220 may output an image or data processed by the second display device 200. According to an embodiment of the disclosure, the display 220 may display the game screen directly received from the first display device 100 or received through the service server 400.

The memory 230 may store programs for processes and controls by the processor 240 and may store data input to or output from the second display device 200. Also, the memory 230 may store pieces of data required for operations of the second display device 200.

The memory 230 may include at least one type of storage medium among a flash memory type, a hard disk type, a multimedia card micro type, a card type memory (for example, a secure digital (SD) or extreme digital (XD) memory), random access memory (RAM), static RAM (SRAM), read-only memory (ROM), electrically erasable programmable ROM (EEPROM), programmable ROM (PROM), a magnetic memory, a magnetic disk, and an optical disk.

The processor 240 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions. The processor 240 may, for example, control all operations of the second display device 200. For example, the processor 240 may perform functions of the second display device 200 described in the disclosure by executing one or more instructions stored in the memory 230.

According to an embodiment of the disclosure, the processor 240 may store one or more instructions in a memory provided therein, and control operations of the second display device 200 to be performed by executing the one or more instructions stored in the memory provided therein. In other words, the processor 240 may perform a specified operation by executing a program or at least one instruction stored in the memory 230 or in the memory provided in the processor 240.

According to an embodiment of the disclosure, the processor 240 may execute the one or more instructions stored in the memory 230 to display a graphical user interface enabling a friend join request.

According to an embodiment of the disclosure, the processor 240 may execute the one or more instructions stored in the memory 230 to receive a user input of inputting an authentication number together with a user input of selecting the friend join request. According to an embodiment of the disclosure, the authentication number may be generated by the service server 400 and transmitted to the first display device 100, and transmitted to the second user by the first user of the first display device 100. The first user may transmit the authentication number to the second user through any one of various transmitting methods, such as a phone call, a messenger, and an email.

According to an embodiment of the disclosure, the processor 240 may execute the one or more instructions stored in the memory 230 to transmit, to the service server 400, the authentication number together with the friend join request.

According to an embodiment of the disclosure, the processor 240 may execute the one or more instructions stored in the memory 230 to receive and display the game screen that is being displayed on the first display device 100, through the service server 400.

According to an embodiment of the disclosure, the processor 240 may execute the one or more instructions stored in the memory 230 to receive, from the second controller 20, the control signal for controlling the execution of the game application corresponding to the game screen being displayed on the display 220, and transmit the received control signal to the service server 400.

According to an embodiment of the disclosure, the processor 240 may execute the one or more instructions stored in the memory 230 to, when the format of the control signal of the second display device 200 is different from or not compatible with the format of the control signal of the first display device 100, convert the format of the control signal of the second display device 200 into the format of the control signal of the first display device 100, and transmit the format-converted control signal to the service server 400.

Hereinafter, the second controller 20 will be described.

The second controller 20 may include a communication interface (e.g., including communication circuitry) 21, a user input unit (e.g., including input circuitry) 22, a memory 23, and a processor (e.g., including processing circuitry) 24. However, the second controller 20 may include more or fewer components than illustrated components, and is not limited to the above example.

The communication interface 21 may include various communication circuitry included in one or more modules enabling wireless communication between the second controller 20 and the wireless communication system or between the second controller 20 and another device. According to an embodiment of the disclosure, the communication interface 21 may perform communication with the second display device 200 according to a short-range communication technology. The short-range communication technology may include, for example, Bluetooth communication, Wi-Fi communication, and infrared communication. According to an embodiment of the disclosure, the communication interface 21 may perform communication with the game server 300 according to an Internet protocol.

The user input unit 22 may be any type of interface capable of receiving a user input. For example, the user input unit 22 may include various circuitry including, for example, a manipulation button for receiving an input of the user by being arranged in a portion of the second controller 20, a touch sensitive display configured to detect a touch input, and a microphone for receiving a speech utterance input of the user.

The memory 23 may store programs for processes and controls by the processor 24 and may store data input to or output from the second controller 20.

The memory 23 may include at least one type of storage medium among a flash memory type, a hard disk type, a multimedia card micro type, a card type memory (for example, a secure digital (SD) or extreme digital (XD) memory), random access memory (RAM), static RAM (SRAM), read-only memory (ROM), electrically erasable programmable ROM (EEPROM), programmable ROM (PROM), a magnetic memory, a magnetic disk, and an optical disk.

The processor 24 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions. The processor 24 may, for example, control all operations of the second controller 20. For example, the processor 24 may perform functions of the second controller 20 described in the disclosure by executing one or more instructions stored in the memory 23.

According to an embodiment of the disclosure, the processor 24 may store one or more instructions in a memory provided therein, and control the above-described operations to be performed by executing the one or more instructions stored in the memory provided therein. In other words, the processor 24 may perform a specified operation by executing a program or at least one instruction stored in the memory 23 or in the memory provided in the processor 24.

According to an embodiment of the disclosure, the processor 24 may execute the one or more instructions stored in the memory 23 to perform a communication connection to the second display device 200 using a short-range wireless communication technology. The short-range wireless communication technology may include a Bluetooth communication technology or a Wi-Fi direct technology.

According to an embodiment of the disclosure, the processor 24 may execute the one or more instructions stored in the memory 23 to receive, from the second display device 200, information for connecting to the game server 300, and connect to the game server 300 using the received information for connecting to the game server 300. For example, the information for connecting to the game server 300 is a URL for accessing the game server 300 or user account information for connecting to the game server 300, and may include a user ID or a password.

According to an embodiment of the disclosure, the processor 24 may execute the one or more instructions stored in the memory 23 to transmit, to the second display device 200, an input signal corresponding to a user input received through the user input unit 22.

The second controller 20 may be any type of device that performs a function by including a processor and a memory. The second controller 20 may include various electronic devices such as a remote controller, a game controller, and a smartphone.

Meanwhile, the block diagram of the second controller 20 shown in FIG. 2 is a block diagram according to an embodiment of the disclosure. The components of the block diagram may be integrated, a component may be added, or the component may be omitted according to the specification of the second controller 20. For example, two or more components may be integrated into one component or one component may be divided into two or more components when necessary. Also, a function performed by each block is only for describing an embodiment of the disclosure and specific operations or devices do not limit the scope of right of the disclosure.

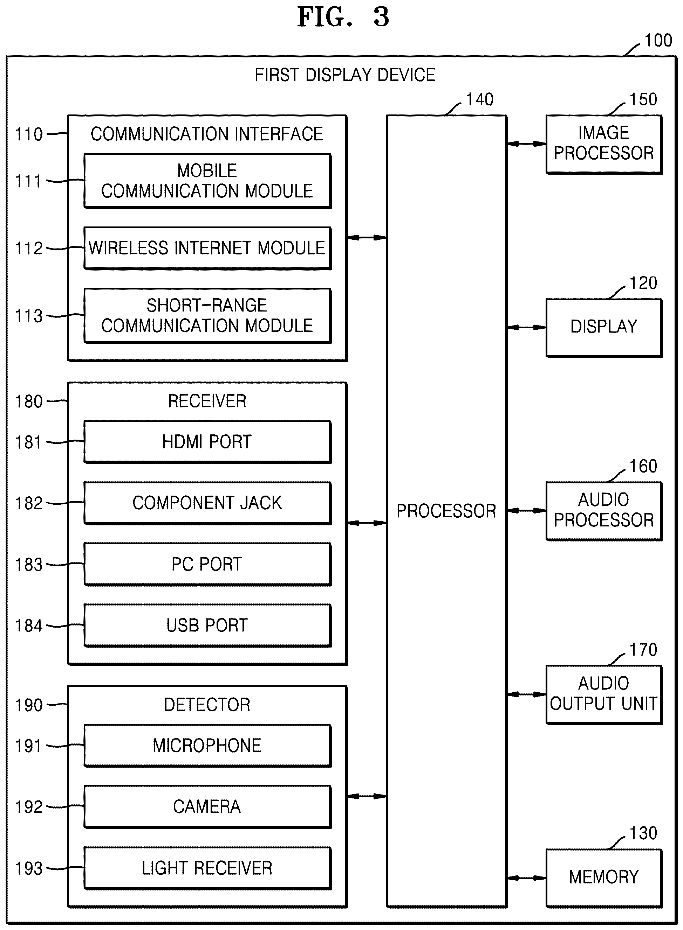

FIG. 3 is a block diagram illustrating an example configuration of the first display device 100 according to various embodiments.

Referring to FIG. 3, the first display device 100 may include, in addition to the communication interface (e.g., including communication circuitry) 110, the display 120, the memory 130, and the processor (e.g., including processing circuitry) 140, an image processor (e.g., including image processing circuitry) 150, an audio processor (e.g., including audio processing circuitry) 160, an audio output unit (e.g., including audio output circuitry) 170, a receiver (e.g., including various receiving circuitry) 180, and a detector (e.g., including various circuitry) 190.

The communication interface 110 may include various communication circuitry included in one or more modules enabling wireless communication between the first display device 100 and the wireless communication system or between the first display device 100 and another electronic device. For example, the communication interface 110 may include a mobile communication module 111, a wireless Internet module 112, and a short-range communication module 113.

The mobile communication module 111 may transmit or receive a wireless signal to or from at least one of a base station, an external terminal, or a server, on a mobile communication network. The wireless signal may include various types of data according to exchange of a voice call signal, an image call signal, or a text/multimedia message.

The wireless Internet module 112 denotes a module for a wireless Internet access, and may be provided inside or outside the first display device 100. A wireless Internet technology may include wireless local area network (WLAN), wireless broadband (Wibro), world interoperability for microwave access (Wimax), and high speed downlink packet access (HSDPA). The wireless Internet module 112 may connect the first display device 100 to another device through Wi-Fi peer-to-peer (P2P) connection.

The short-range communication module 113 denotes a module for short-range communication. Short-range communication technology may include Bluetooth, Bluetooth low energy (BLE), radio frequency identification (RFID), infrared data association (IrDA), ultra-wideband (UWB), and ZigBee.

The display 120 may display, on a screen, an image signal received from the game server 300.

The memory 130 may store a program related to operations of the first display device 100 and various types of data generated during the operations of the first display device 100.

The memory 130 may store at least one instruction. Also, the memory 130 may store at least one instruction executed by the processor 140. Also, the memory 130 may store at least one program executed by the processor 140. Also, the memory 130 may store an application for providing a specified service.

The memory 130 may include at least one type of storage medium among a flash memory type, a hard disk type, a multimedia card micro type, a card type memory (for example, a secure digital (SD) or extreme digital (XD) memory), random access memory (RAM), static RAM (SRAM), read-only memory (ROM), electrically erasable programmable ROM (EEPROM), programmable ROM (PROM), a magnetic memory, a magnetic disk, and an optical disk.

The processor 140 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions. The processor 140 may, for example, control all operations of the first display device 100. For example, the processor 140 may perform functions of the first display device 100 described in the disclosure by executing one or more instructions stored in the memory 130.

According to an embodiment of the disclosure, the processor 140 may store one or more instructions in a memory provided therein, and control operations of the first display device 100 to be performed by executing the one or more instructions stored in the memory provided therein. In other words, the processor 140 may perform a specified operation by executing a program or at least one instruction stored in the memory 130 or in the memory provided in the processor 140.

According to an embodiment of the disclosure, the processor 140 may execute the at least one instruction stored in the memory 130 to control the communication interface 110 to transmit the request to execute the game application to the game server 300 and receive the game screen according to the execution of the game application from the game server 300.

According to an embodiment of the disclosure, the processor 140 may execute the at least one instruction stored in the memory 130 to control the display 120 to display the game screen.

According to an embodiment of the disclosure, the processor 140 may execute the at least one instruction to control the communication interface 110 to transmit the game screen to the second display device 200 corresponding to the second user by communicating with the second display device 200 according to an input of designating the second user.

According to an embodiment of the disclosure, the processor 140 may execute the at least one instruction to receive the control signal for controlling the game application from the second display device 200.

According to an embodiment of the disclosure, the processor 140 may execute the at least one instruction stored in the memory 130 to transmit, to the game server 300, the received control signal, and receive, from the game server 300, the game screen obtained by executing the game application, based on the control signal.

According to an embodiment of the disclosure, the processor 140 may execute the at least one instruction stored in the memory 130 to provide the graphical user interface including the invitation function enabling designation of the second user, and display the authentication number generated according to the user input of selecting the invitation function.

According to an embodiment of the disclosure, the processor 140 may execute the at least one instruction stored in the memory 130 to provide the graphical user interface to a quick panel output according to reception of a pre-designated key input.

According to an embodiment of the disclosure, the processor 140 may execute the at least one instruction stored in the memory 130 to receive, from the service server 400, a friend list including the second user corresponding to the second display device 200 joining in using the generated authentication number, and control the display 120 to display the friend list received from the service server 400.

According to an embodiment of the disclosure, the processor 140 may execute the at least one instruction stored in the memory 130 to provide the graphical user interface including the friend list, and receive the input of designating the second user by receiving an input of selecting the second user included in the friend list provided in the graphical user interface.

According to an embodiment of the disclosure, the processor 140 may execute the at least one instruction stored in the memory 130 to perform communication with the second display device 200 through the service server 400, transmit the game screen to the second display device 200 through the service server 400, and receive the control signal from the second display device 200 through the service server 400.

According to an embodiment of the disclosure, the processor 140 may execute the at least one instruction stored in the memory 130 to control the communication interface 110 to perform a direct communication connection with the second display device 200, and control the communication interface 110 to directly transmit the game screen to the second display device 200 and directly receive the control signal from the second display device 200.

According to an embodiment of the disclosure, the processor 140 may execute the at least one instruction stored in the memory 130 to identify whether the format of the control signal received from the second display device 200 is compatible with the format of the control signal of the first display device 100, transmit the control signal of the second display device 200 to the game server 300 as is, based on identifying that the format of the control signal of the second display device 200 is compatible with the format of the control signal of the first display device 100, and convert the format of the control signal of the second display device 200 into the format of the control signal of the first display device 100 and transmit the format-converted control signal to the game server 300, based on identifying that the format of the control signal of the second display device 200 is not compatible with the format of the control signal of the first display device 100.

According to an embodiment of the disclosure, the processor 140 may execute the at least one instruction stored in the memory 130 to configure the graphical user interface to include a chatting function enabling voice chatting or video chatting with the second user.

Under control of the processor 140, the image processor 150 may process the image signal received from the receiver 180 or the communication interface 110 and output the processed image signal to the display 120.

Under control of the processor 140, the audio processor 160 may convert an audio signal received from the receiver 180 or the communication interface 110 into an analog audio signal, and output the analog audio signal to the audio output unit 170.

The audio output unit 170 may include various audio output circuitry and output audio (e.g., speech or sound) input through the communication interface 110 or receiver 180. Also, the audio output unit 170 may output audio stored in the memory 130 according to control by the processor 140. The audio output unit 170 may include at least one of a speaker, a headphone output terminal, or a Sony/Philips digital interface (S/PDIF) terminal or a combination thereof.

The receiver 180 may include various circuitry and receive video (e.g., a moving image), audio (e.g., speech or music), and additional information (e.g., electronic program guide (EPG)) from the outside of the first display device 100 according to control by the processor 140. The receiver 180 may include one of a high-definition multimedia interface (HDMI) port 181, a component jack 182, a personal computer (PC) port 183, and a universal serial bus (USB) port 184, or a combination thereof. The receiver 180 may further include a display port (DP), a thunderbolt, a mobile high-definition link (MHL), in addition to the HDMI port 181.

The detector 190 may include various circuitry and detects speech of a user, an image of the user, or an interaction of the user, and may include a microphone 191, a camera 192, and a light receiver 193.

The microphone 191 receives speech uttered by the user. The microphone 191 may convert the received speech into an electric signal and output the electric signal to the processor 140. The user's speech may include, for example, speech corresponding to a menu or function of the first display device 100. According to an embodiment of the disclosure, the microphone 191 may receive utterance speech of the user for a voice call function or a video call function, according to control by the processor 140.

The camera 192 may receive an image (e.g., consecutive frames) corresponding to motion of the user including a gesture within a camera recognition range. The processor 140 may select a menu displayed on the first display device 100 using a received motion recognition result or perform control corresponding to the motion recognition result. According to an embodiment of the disclosure, the camera 192 may capture an image of the user for the video call function, according to control by the processor 140.

The light receiver 193 receives an optical signal (including the control signal) received from an external control device. The light receiver 193 may receive an optical signal corresponding to a user input (e.g., touch, press, touch gesture, speech, or motion) from a control device. A control signal may be extracted from the received optical signal according to control by the processor 140.

The processor 140 may control all operations of the first display device 100 and a signal flow between the first display device 100 and internal components (not shown), and perform a function of processing data. When there is a user input or a pre-set and stored condition is satisfied, the processor 140 may execute an operating system (OS) and various applications stored in the memory 130.

In addition, the processor 140 may include a graphics processing unit (GPU) (not shown) for graphics processing corresponding to a video. The GPU generates a screen including various objects, such as an icon, an image, or text, using an operator (not shown) and a renderer (not shown). The operator calculates attribute values such as coordinate values, shapes, sizes, and colors of objects to be displayed according to layout of a screen using a user interaction detected through the detector 190. The renderer generates a screen of various layouts including objects based on the attribute values calculated by the operator.

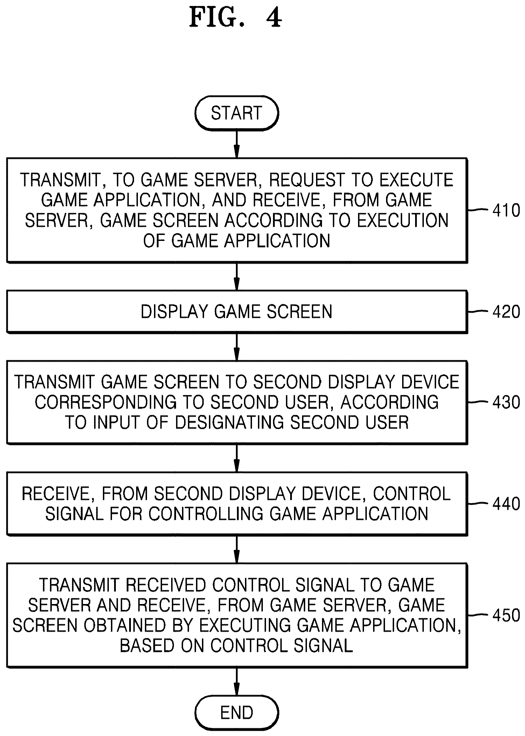

FIG. 4 is a flowchart illustrating an example method of operating the first display device 100, according to various embodiments.

Referring to FIG. 4, in operation 410, the first display device 100 may transmit, to the game server 300, the request to execute the game application, and receive, from the game server 300, the game screen according to the execution of the game application.

According to an embodiment of the disclosure, the first display device 100 may receive the user input of requesting the execution of the game application provided by the game server 300, and transmit, to the game server 300, the request to execute the game application according to the user input. According to such a request to execute the game application of the first display device 100, the game server 300 may execute the game application and transmit, to the first display device 100, the game screen obtained according to the execution of the game application.

In operation 420, the first display device 100 may display the game screen received from the game server 300.

According to the display of the game screen as such, according to an embodiment of the disclosure, the first user of the first display device 100 may input the control signal for controlling the execution of the game application to the first display device 100 using the first controller 10.

According to an embodiment of the disclosure, upon receiving the control signal from the first controller 10, the first display device 100 may transmit the control signal to the game server 300, and the game server 300 may execute the game application, based on the received control signal, and transmit the game screen obtained according to the execution to the first display device 100. According to such an operation, the first user of the first display device 100 may view, through the first display device 100, a result screen according to his/her control on the game application.

In operation 430, the first display device 100 may transmit, to the second display device 200, the game screen by communicating with the second display device 200 corresponding to the second user, according to the input of designating the second user. For example, the first user may want to invite or enable another person, e.g., the second user, participate in the game application while playing the game application through the game server 300.

According to an embodiment of the disclosure, the first display device 100 may provide the graphical user interface enabling the second user to be designated.

According to an embodiment of the disclosure, the first display device 100 may provide the graphical user interface including a function of inviting a friend, and receive the input of designating the second user according to an input of selecting such a friend invitation function.

According to an embodiment of the disclosure, the first display device 100 may provide the graphical user interface including a friend list, and receive the input of designating the second user according to an input of selecting one friend from the friend list.

According to an embodiment of the disclosure, the first display device 100 may provide the graphical user interface enabling the second user to be designated to the quick panel output according to a pre-designated input. The quick panel is a user interface element providing an access to features or options frequently used in a game, and may include shortcuts to various menus in the game, such as settings, inventory, or map, important information, and a state update, such as player's score or level. The quick panel enables users to quickly and conveniently access required menus without having to navigate through complicated menus or a screen.

According to an embodiment of the disclosure, the first display device 100 may transmit the game screen to the second display device 200 corresponding to the second user, according to the input of designating the second user.

According to an embodiment of the disclosure, the first display device 100 may directly transmit, to the second display device 200, the game screen by directly communicating with the second display device 200 corresponding to the second user, according to the input of designating the second user.

According to an embodiment of the disclosure, the first display device 100 may transmit the game screen to the second display device 200 corresponding to the second user through the service server 400, according to the input of designating the second user.

In operation 440, the first display device 100 may receive, from the second display device 200, the control signal for controlling the game application.

According to an embodiment of the disclosure, the second display device 200 may display the game screen on the display 220, and receive the control signal for controlling the execution of the game application from the second controller 20 connected to the second display device 200. Then, the second display device 200 may transmit the control signal to the first display device 100 directly or through the service server 400.

In operation 450, the first display device 100 may transmit the received control signal to the game server 300 and receive, from the game server 300, the game screen obtained by executing the game application, based on the control signal from the second display device 200.

According to an embodiment of the disclosure, the first display device 100 may transmit the control signal received from the second display device 200 to the game server 300, and the game server 300 may transmit, to the first display device 100, the game screen obtained by executing the game application, based on the received control signal.

According to an embodiment of the disclosure, the first display device 100 may identify whether the format of the control signal received from the second display device 200 is compatible with the format of the control signal of the first display device 100. For example, when the control signal of the first display device 100 and the control signal of the second display device 200 are generated according to a same control signal standard, the control signals may be compatible. For example, the first controller 10 providing the control signal to the first display device 100 and the second controller 20 providing the control signal to the second display device 200 may be manufactured by a same manufacturer or may be devices configured to generate a control signal according to a same control signal format.

According to an embodiment of the disclosure, when it is identified that the format of the control signal received from the second display device 200 is compatible with the format of the control signal of the first display device 100, the first display device 100 may transmit the control signal of the second display device 200 as is to the game server 300.

According to an embodiment of the disclosure, when it is identified that the format of the control signal received from the second display device 200 is not compatible with the format of the control signal of the first display device 100, the first display device 100 may convert the format of the control signal of the second display device 200 into the format of the first display device 100, and transmit the format-converted control signal to the game server 300.

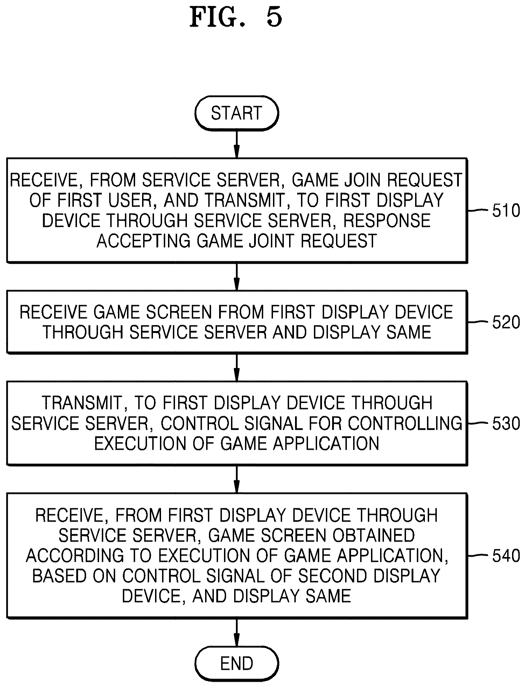

FIG. 5 is a flowchart illustrating an example method of operating the second display device 200, according to various embodiments.

Referring to FIG. 5, in operation 510, the second display device 200 may transmit, to the first display device 100 through the service server 400, a response accepting an invitation request or a game join request of the first user.

According to an embodiment of the disclosure, the second display device 200 may provide a graphical user interface for responding to the invitation request of the first user of the first display device 100, and receive, through the graphical user interface, a user input including an authentication number together with a join request. For example, when a friend connection relationship between the first user and the second user is not generated in the service server 400, e.g., when the first user invites the second user for the first time, the service server 400 may generate the authentication number and provide the same to the first display device 100. Then, when the second user who received the authentication number from the first user inputs the authentication number to the second display device 200 together with the join request, the second display device 200 may transmit the authentication number to the service server 400 together with the join request. The service server 400 may authenticate the second user by determining whether the authentication number received from the second display device 200 is the same as the authentication number generated by the service server 400 and provided to the first display device 100. When the authentication is successful, the service server 400 may transmit, to the first display device 100, a response indicating that the authentication is completed.

According to an embodiment of the disclosure, the second display device 200 may provide a graphical user interface for responding to the game join request of the first user of the first display device 100, and receive, through the graphical user interface, a user input accepting the join request. For example, when the friend connection relationship between the first user and the second user is generated in the service server 400, the first display device 100 may transmit the game join request of the second user to the service server 400 while playing a game, and the service server 400 may transmit the game join request to the second display device 200. The second display device 200 may output a popup window inquiring the game join request, and receive the user input indicating the response accepting the game join request through the popup window. Then, the second display device 200 may transmit the response accepting the join request to the service server 400. The service server 400 may transmit, to the first display device 100, a response indicating that the join request has been accepted, according to the response accepting the join request, received from the second display device 200.

In operation 520, the second display device 200 may receive a game screen from the first display device 100 through the service server 400, and display the same.

According to an embodiment of the disclosure, when the service server 400 receives the game screen from the first display device 100 and transmits the received game screen to the second display device 200, the second display device 200 may receive the game screen and display the game screen on the display 220.

In operation 530, the second display device 200 may transmit, to the first display device 100 through the service server 400, a control signal for controlling execution of a game application.

According to an embodiment of the disclosure, the second display device 200 may receive, from the second controller 20, the control signal for controlling the execution of the game application while displaying the game screen on the display 220. The second display device 200 may transmit the received control signal to the service server 400, and the service server 400 may transmit the control signal received from the second display device 200 to the first display device 100.

According to an embodiment of the disclosure, the second display device 200 may obtain information about a format of the control signal of the first display device 100. For example, the second display device 200 may obtain metadata about the game application or game content, together with game stream data corresponding to the game screen. The second display device 200 may obtain, from the metadata, information about the format of the control signal for controlling the execution of the game application. The game application is initially started by the request of the first display device 100, and thus, the control signal received by the first display device 100 from the first controller 10 is a control signal having a format for controlling the execution of the game application. However, the control signal received by the second display device 200 from the second controller 20 may be or may not be compatible with the control signal from the first controller 10. When the control signals are compatible, the control signal of the second display device 200 may be used as is to control the execution of the game application, but when the control signals are not compatible, the control signal of the second display device 200 may need to be converted.

According to an embodiment of the disclosure, the second display device 200 may determine whether a format of the control signal of the second display device 200 is compatible with a format of the control signal of the first display device 100, based on the information about the format of the control signal of the first display device 100, and when the control signals are compatible, transmit the control signal of the second display device 200 to the service server 400 as is. When the control signals are not compatible, the second display device 200 may convert the format of the control signal of the second display device 200 into the format of the control signal of the first display device 100, and transmit the format-converted control signal to the service server 400.

In operation 540, the second display device 200 may receive, from the first display device 100 through the service server 400, a game screen obtained according to the execution of the game application, based on the control signal of the second display device 200, and display the game screen.

According to an embodiment of the disclosure, the control signal of the second display device 200 may be transmitted to the service server 400 through the first display device 100, and the service server 400 may transmit, to the first display device 100, the game screen obtained as a result of executing the game application, based on the control signal of the second display device 200. The service server 400 may receive the game screen from the first display device 100 and transmit the same to the second display device 200. Accordingly, the second display device 200 may display the game screen obtained based on the control signal of the second display device 200.

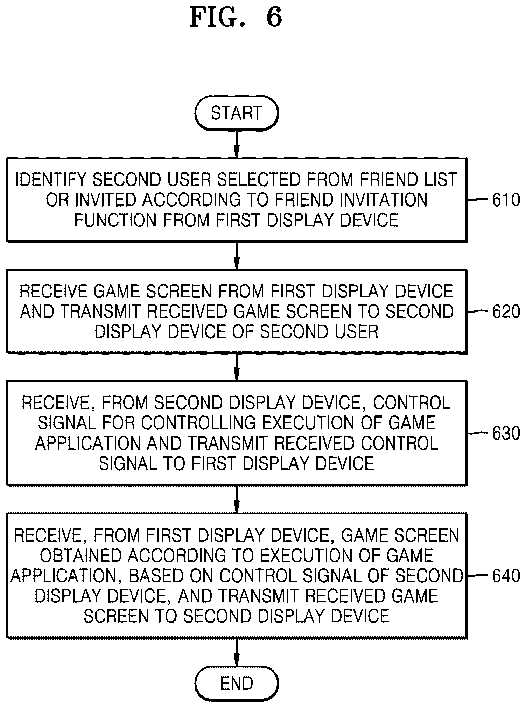

FIG. 6 is a flowchart illustrating an example method of operating the service server 400, according to various embodiments.

Referring to FIG. 6, in operation 610, the service server 400 may identify the second user selected from a friend list or invited according to a friend invitation function from the first display device 100.

According to an embodiment of the disclosure, the service server 400 may generate an authentication number according to a friend invitation request of the first display device 100 and transmit the same to the first display device 100, and identify the second user of the second display device 200, who responded to friend invitation using the authentication number, as a user to whom a game screen is to be transmitted.

According to an embodiment of the disclosure, the service server 400 may identify the second user according to an input of selecting a friend from the friend list from the first display device 100. At this time, the service server 400 may pre-generate and store a friend connection relationship between the first user and the second user. In this case, the service server 400 may transmit a game join request to the second display device 200 of the second user identified according to the input of selecting a friend from the friend list, and receive a response accepting the game join request from the second display device 200, thereby identifying the second user to whom the game screen is to be transmitted.

In operation 620, the service server 400 may receive the game screen from the first display device 100 and transmit the received game screen to the second display device 200.

In operation 630, the service server 400 may receive, from the second display device 200, a control signal for controlling execution of a game application and transmit the received control signal to the first display device 100.

According to an embodiment of the disclosure, the second display device 200 may obtain information about a format of the control signal of the first display device 100. For example, the service server 400 may obtain metadata about the game application or game content, together with game stream data corresponding to the game screen. The service server 400 may obtain, from the metadata, information about the format of the control signal for controlling the execution of the game application. The game application is initially started by the request of the first display device 100, and thus, the control signal received by the first display device 100 from the first controller 10 is a control signal having a format for controlling the execution of the game application. However, the control signal received by the second display device 200 from the second controller 20 may be or may not be compatible with the control signal from the first controller 10. When the control signals are compatible, the control signal of the second display device 200 may be used as is to control the execution of the game application, but when the control signals are not compatible, the control signal of the second display device 200 may need to be converted.

According to an embodiment of the disclosure, the service server 400 may determine whether a format of the control signal of the second display device 200 is compatible with a format of the control signal of the first display device 100, based on the information about the format of the control signal of the first display device 100, and when the control signals are compatible, transmit the control signal of the second display device 200 to the first display device 100 as is. When the control signals are not compatible, the service server 400 may convert the format of the control signal of the second display device 200 into the format of the control signal of the first display device 100, and transmit the format-converted control signal to the first display device 100.

In operation 640, the service server 400 may receive, from the first display device 100, a game screen obtained according to the execution of the game application, based on the control signal of the second display device 200, and transmit the received game screen to the second display device 200.

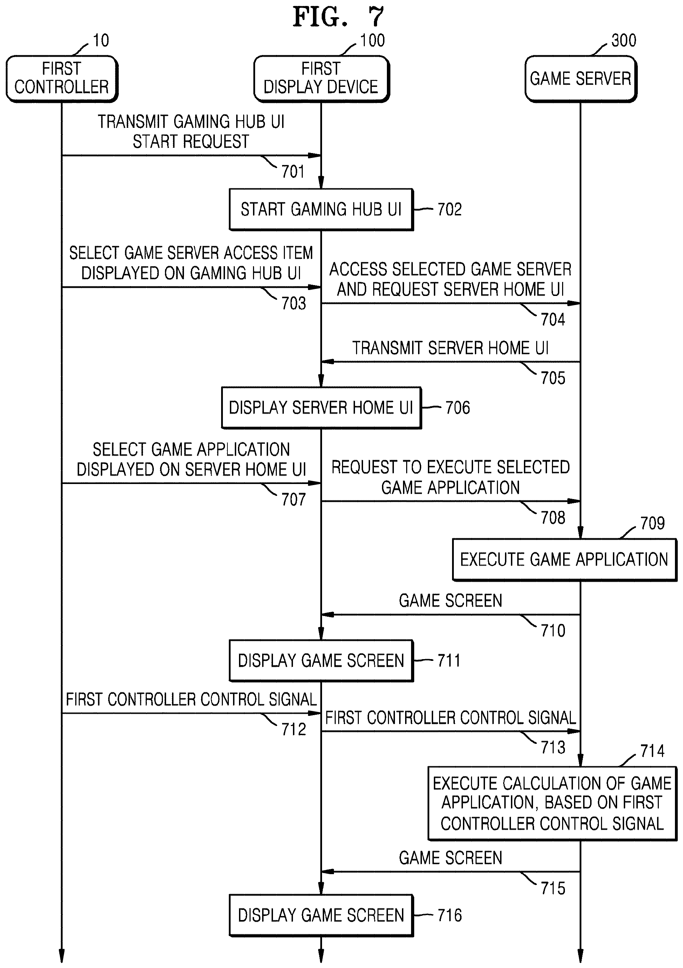

Hereinafter, the operating methods between the first display device 100, the second display device 200, and the service server 400, which have been described with reference to FIGS. 4 to 6, will be described in greater detail below with reference to FIGS. 7 to 27.

FIG. 7 is a signal flow diagram illustrating an example method by which the first display device 100 displays a game screen by requesting the game server 300 to execute a game application, according to various embodiments. Operations shown in FIG. 7 may be examples of operations 410 and 420 shown in FIG. 4.

Referring to FIG. 7, in operation 701, the first controller 10 may transmit a gaming hub user interface (UI) start request. A gaming hub is a service arranged in the first display device 100 to further conveniently and easily provide game content to users, and a gaming hub UI indicates a UI for providing a gaming hub service.

The first controller 10 is communicably connected to the first display device 100 and turned on. A user may press a button provided on the first controller 10 to transmit, to the first display device 100, a request to start a gaming hub UI displayed on the first display device 100. The user may transmit such a request by pressing a specific button provided on the first controller 10 or by selecting an item for starting the gaming hub UI provided on a home screen provided by the first display device 100.

In operation 702, the first display device 100 may start the gaming hub UI according to the gaming hub UI start request received from the first controller 10. The gaming hub UI may include various menus and items for executing the game content. For example, the gaming hub UI may include items enabling an access to one or more content providing servers.

In operation 703, the first controller 10 may transmit, to the first display device 100, an input of selecting a game server access item displayed on a screen of the gaming hub UI displayed on the first display device 100.

For example, the user may select the game server access item from the screen of the gaming hub UI using the first controller 10, and the first controller 10 may transmit an input signal of selecting the game server access item to the first display device 100.

In operation 704, the first display device 100 may access the game server 300 using a URL related to the game server access item, according to the input of selecting the game server access item, received from the first controller 10, and request a screen of a server home UI provided by the game server 300. For example, when the input of selecting the game server access item is received from the first controller 10, the first display device 100 may access the game server 300 using the URL related to the game server access item, and request the screen of the server home UI provided by the game server 300.

In operation 705, the game server 300 may transmit the server home UI to the first display device 100 according to the request of the first display device 100.

In operation 706, the first display device 100 may display the server home UI received from the game server 300. The server home UI includes items for selecting one or more game applications.

In operation 707, the first controller 10 may transmit, to the first display device 100, an input of selecting a game execution icon displayed on the screen of the server home UI. For example, the screen of the server home UI may include items for executing one or more game applications, and the user may select, using the first controller 10, an item for executing one desired game application from among the displayed items for executing the one or more game applications.

In operation 708, the first display device 100 may receive, from the first controller 10, an input of selecting a game application execution item, and transmit, to the game server 300, a request to execute a game application corresponding to the selected game application execution item.

In operation 709, the game server 300 may execute the game application requested to be executed by the first display device 100, and in operation 710, the game server 300 may transmit, to the first display device 100, a game screen obtained as a result of executing the game application through streaming.

In operation 711, the first display device 100 may receive, from the game server 300, the game screen that is the result of executing the game application, and display the game screen.

In operation 712, the first controller 10 may receive a user input for controlling the execution of the game application corresponding to the game screen displayed on the first display device 100, and transmit a control signal corresponding to the received user input to the first display device 100.

In operation 713, the first display device 100 may transmit, to the game server 300, the control signal from the first controller 10.

In operation 714, the game server 300 may execute calculation of the game application, based on the control signal of the first controller 10, received from the first display device 100.

In operation 715, the game server 300 may transmit, to the first display device 100, the game screen that is the result of executing the game application.

In operation 716, the first display device 100 may display, on the display 120 the game screen received from the game server 300.

In FIG. 7, it is illustrated that the gaming hub UI start request, the selecting of the game server access item, and the selecting of the game application are transmitted by the first controller 10, but the disclosure is not limited thereto, and the request or the selecting may be transmitted by a remote controller for controlling the first display device 100.

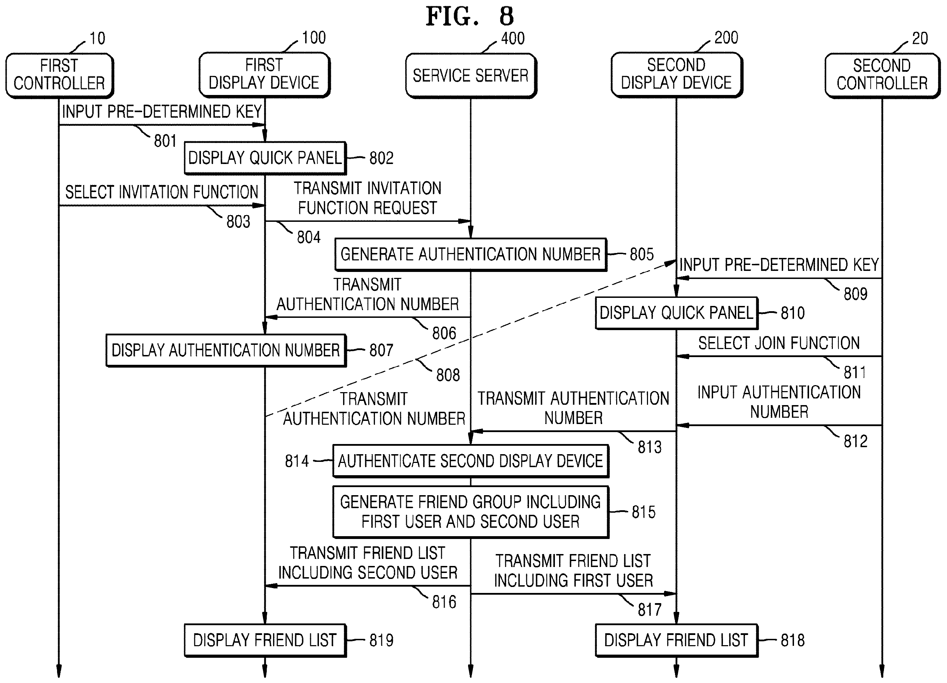

FIG. 8 is a signal flow diagram illustrating an example method by which the first user invites the second user to participate in a game being played by the first user, using a friend invitation function, according to various embodiments.

Referring to FIG. 8, in operation 801, the first display device 100 may receive, from the first controller 10, a signal corresponding to an input of a pre-determined key.

According to an embodiment of the disclosure, the first user of the first display device 100 may display a quick panel by pressing the pre-determined key of the first controller 10 when the first user wants to invite another user participate in game play while playing a game according to a game application executed through the game server 300. The first controller 10 may transmit, to the first display device 100, the signal corresponding to the input of the pre-determined key, according to the input of pressing the pre-determined key. For example, the first user may press a home key in the first controller 10 as the pre-determined key.

In operation 802, the first display device 100 may display the quick panel according to the input of the pre-determined key, received from the first controller 10. The quick panel is a user interface element providing an access to features or options frequently used in a game, and may include shortcuts to various menus in the game, such as settings, inventory, or map, important information, and a state update, such as player's score or level. The quick panel enables users to quickly and conveniently access required menus without having to navigate through complicated menus or a screen.

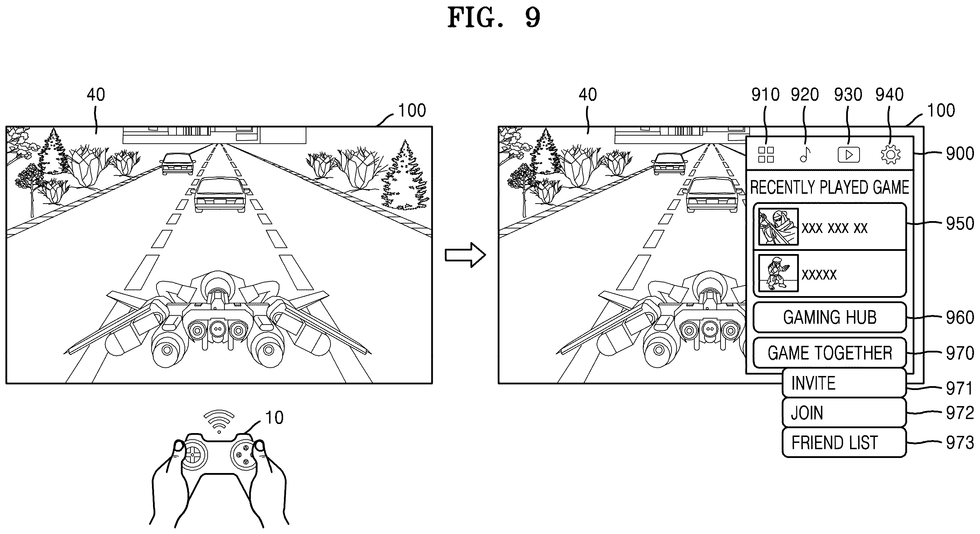

FIG. 9 is a diagram illustrating an example of a quick panel 900 according to various embodiments.

Referring to FIG. 9, the first display device 100 may display the quick panel 900 upon receiving an input of a pre-determined key from the first controller 10 while displaying a game screen 40. The quick panel 900 is in the form of a popup window and may be displayed by being overlaid on the game screen 40.

According to an embodiment of the disclosure, the quick panel 900 may include a search item 910 enabling an access to an integrated search screen, a controller/sound output item 920 enabling a connection to a Bluetooth controller or a change in an output of TV sound, a media item 930 enabling viewing of various TV programs or videos, a setting item 940 enabling optimized sound settings for each game genre, optimized image quality settings for each game genre, and selection among a mode for a quick response speed and a mode for a smooth screen, an item 950 showing a list of recently played games, an item 960 enabling to go back to a gaming hub, and a game together item 970 enabling a friend to join during game play.

Lower items of the game together item 970 may include an invite item 971, a join item 972, and a friend list item 973.

The invite item 971 may indicate an item for connecting a friend to participate in game play for the first time.

The join item 972 may indicate an item enabling a user who is invited to game play to input an intention to participate using an authentication number.

The friend list item 973 may indicate a list of friends who are already invited and formed a friend group relationship with a user.

Referring back to FIG. 8, in operation 803, the first display device 100 may receive, from the first controller 10, a signal of selecting an invitation function.

According to an embodiment of the disclosure, the first user may select, using the first controller 10, the invite item 971 that is a lower item of the game together item 970 in the quick panel 900 shown in FIG. 9. Then, the first controller 10 may transmit, to the first display device 100, a signal indicating that the invite item 971 has been selected.

In operation 804, the first display device 100 may transmit an invitation function request to the service server 400.

In operation 805, the service server 400 may generate an authentication number in response to the invitation function request of the first display device 100.

In operation 806, the service server 400 may transmit the generated authentication number to the first display device 100.

In operation 807, the first display device 100 may display, on the display 120, the authentication number received from the service server 400.

In operation 808, the authentication number displayed on the display 120 of the first display device 100 may be transmitted to the second user. For example, the first user of the first display device 100 may identify the authentication number displayed on the first display device 100, and notify the authentication number to the second user whom the first user wants to invite to the game play. A method of transmitting the authentication number to the second user may vary. For example, when one user is selected from among users pre-registered in the first display device 100, the authentication number displayed on the first display device 100 may be transmitted to the selected user automatically through an email, a chatting service, or a display device of the selected user. Alternatively, for example, the authentication number displayed on the first display device 100 may be transmitted to the second user manually by the first user through an email, a phone call, or a chatting service.

In operation 809, the second user of the second display device 200 may press a pre-determined key using the second controller 20 and the second controller 20 may transmit a signal corresponding to an input of the pre-determined key to the second display device 200.

In operation 810, the second display device 200 may display the quick panel 900 upon receiving the input of the pre-determined key from the second controller 20. The quick panel 900 displayed on the second display device 200 may be in the same form as the quick panel 900 displayed on the first display device 100.

In operation 811, the second display device 200 may receive, from the second controller 20, a signal corresponding to selecting of a join function in the quick panel 900. For example, the second user may select the join item 972 in the quick panel 900 displayed on the second display device 200 using the second controller 20, and accordingly, a signal indicating that the join item 972 has been selected may be transmitted to the second display device 200.

In operation 812, the second display device 200 may receive an input signal of the authentication number from the second controller 20.

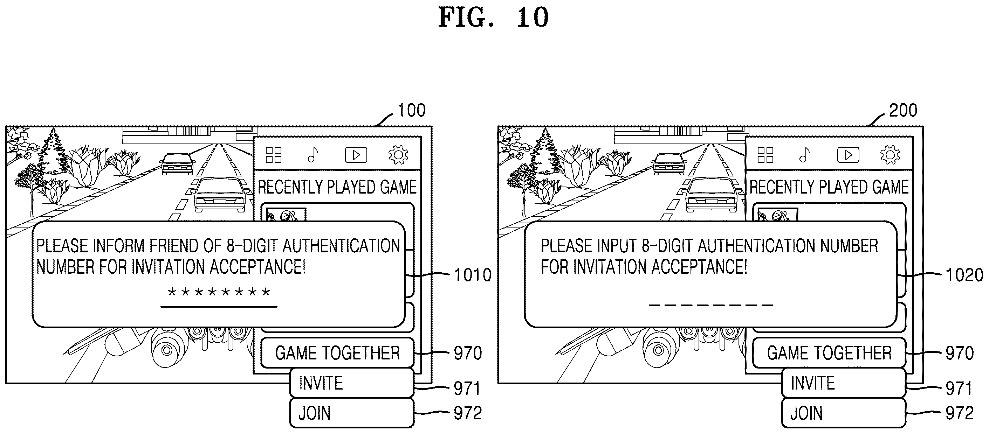

FIG. 10 is a diagram illustrating an example of a user interface of the first display device 100 for displaying an authentication number and a user interface of the second display device 200 for receiving the authentication number, according to various embodiments.

Referring to FIG. 10, upon receiving an authentication number from the service server 400, the first display device 100 may output a popup window 1010 including the authentication number together with a message <Please inform friend of 8-digit authentication number for invitation acceptance!>.

When the second user selects the join item 972 in the quick panel 900 displayed on the second display device 200, the second display device 200 may output a user input interface 1020 for inputting an 8-digit authentication number together with a message <Please input 8-digit authentication number for invitation acceptance!>. Then, the second user may input the authentication number received from the first user using the second controller 20 for a join request.

Referring back to FIG. 8, in operation 813, upon receiving the input of the authentication number from the second controller 20, the second display device 200 may transmit the authentication number to the service server 400.

In operation 814, the service server 400 may authenticate the second display device 200 using the authentication number received from the second display device 200. In other words, the service server 400 may determine whether the authentication number generated by the service server 400 in operation 805 and transmitted to the first display device 100 is the same as the authentication number received from the second display device 200, and when the authentication numbers are the same, identify that the second user of the second display device 200 is a user the first user of the first display device 100 wants for friend invitation.

In operation 815, the service server 400 may generate a friend group including the first user and the second user, based on authenticating the second display device 200 using the authentication number received from the second display device 200.

In operation 816, the service server 400 may transmit the friend list including the second user to the first display device 100 of the first user.

In operation 817, the service server 400 may transmit the friend list including the first user to the second display device 200 of the second user.

In operation 818, the second display device 200 may display the friend list received from the service server 400.

In operation 819, the first display device 100 may display the friend list received from the service server 400.

In FIG. 8, it is illustrated that the input of the pre-determined key and the selecting of the invitation function are transmitted by the first controller 10, but the disclosure is not limited thereto, and the request or the selecting may be transmitted by a remote controller for controlling the first display device 100.

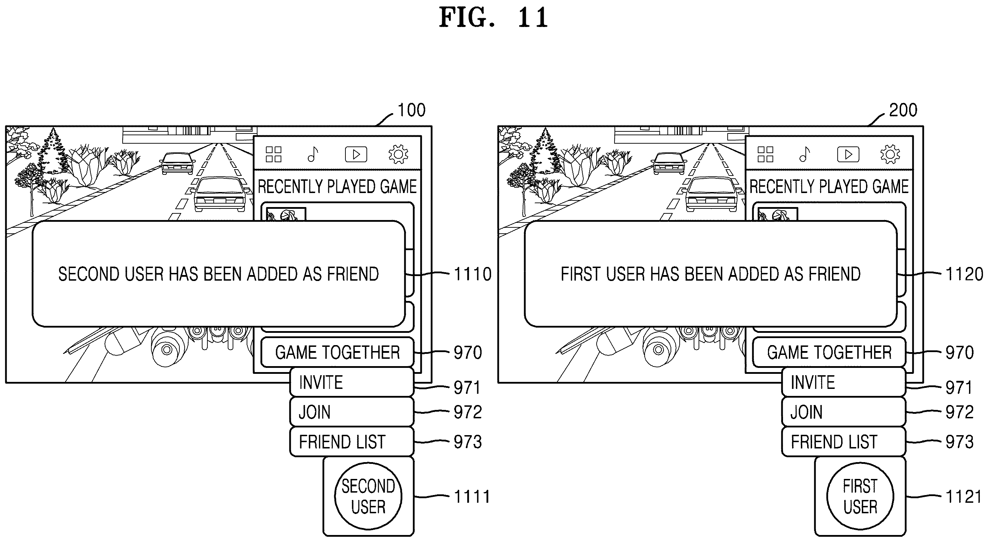

FIG. 11 is a diagram illustrating an example of displaying a friend list on the first display device 100 and the second display device 200, according to various embodiments.

Referring to FIG. 11, upon receiving the friend list including the second user from the service server 400, the first display device 100 may display an item 1111 indicating the second user on the friend list item 973 together with a message 1110 <Second user has been added as friend>. By providing the item 1111 indicating the second user to the friend list item 973 as such, the first display device 100 may select only the item 1111 to perform a game play participation operation when the first display device 100 wants to invite the second user participate in game play next time.

Also, upon receiving the friend list including the first user from the service server 400, the second display device 200 may display an item 1121 indicating the first user on the friend list item 973 together with a message 1120 <First user has been added as friend>. By providing the item 1121 indicating the first user to the friend list item 973 as such, the second display device 200 may select only the item 1121 to perform a game play participation operation when the second display device 200 wants to invite the first user participate in game play next time.

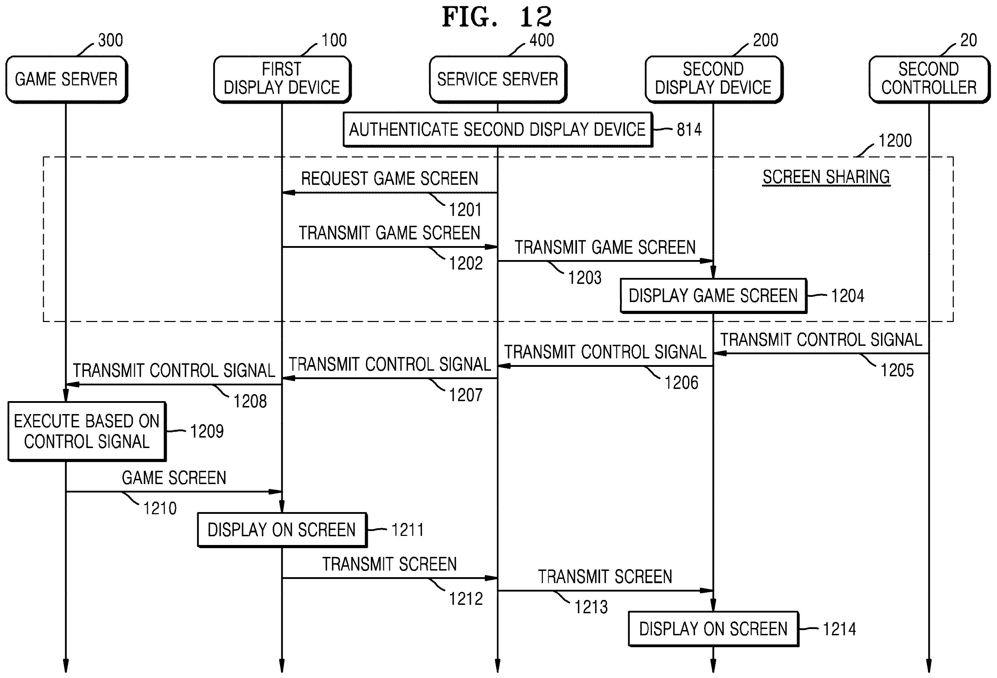

FIG. 12 is a signal flow diagram illustrating an example method of inviting or enabling the second user participate in game play after the second display device 200 is authenticated, according to various embodiments.

Referring to FIG. 12, in operation 814, the service server 400 may complete the authenticating of the second display device 200. Operation 814 corresponds to operation 814 of FIG. 8.

When the authenticating of the second display device 200 is completed as such, the service server 400 may request the first display device 100 to transmit a game screen, in operation 1201.

In operation 1202, the first display device 100 may transmit, to the service server 400, a game screen output by the first display device 100, according to the request of the service server 400.

In operation 1203, the service server 400 may transmit the game screen received from the first display device 100 to the second display device 200.

In operation 1204, the second display device 200 may display the game screen received from the service server 400. A screen sharing operation 1200 is completed between the first display device 100 and the second display device 200 through operations 1201 to 1204, and thus, the second user may view and control execution of a cloud game being played in the first display device 100 of the first user, through the second display device 200 of the second user.

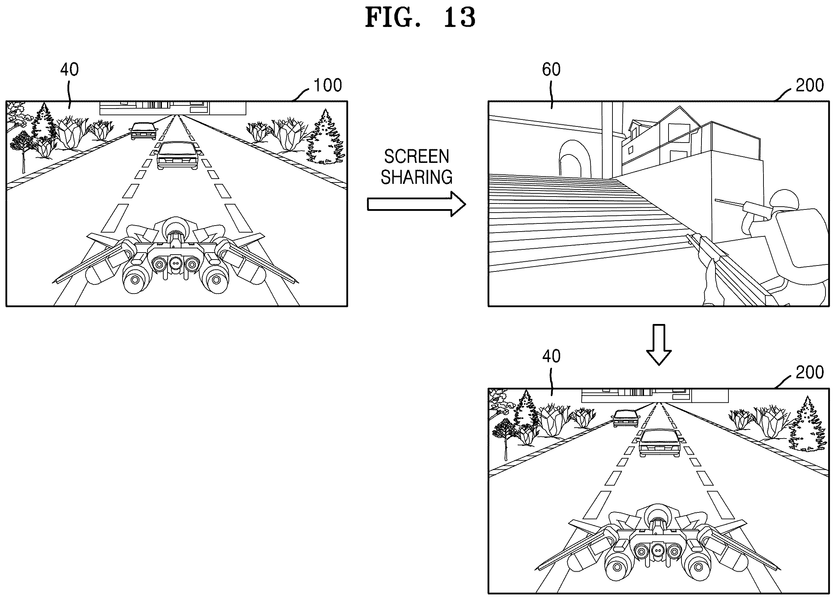

FIG. 13 is a reference diagram illustrating example screen sharing between the first display device 100 and the second display device 200, according to various embodiments.

Referring to FIG. 13, the first display device 100 of the first user displays the game screen 40, and the second display device 200 of the second user displays another piece of content 60.

According to a screen sharing operation described above for the first user to invite the second user participate in game play while playing a game, the second display device 200 may stop outputting of a content screen 60 and display the game screen 40 received from the first display device 100 through the service server 400.

In operation 1205, the second user of the second display device 200 may manipulate an input of controlling a game application using the second controller 20, and accordingly, the second controller 20 may transmit, to the second display device 200, a control signal corresponding to the manipulation.

In operation 1206, upon receiving the control signal from the second controller 20, the second display device 200 may transmit the received control signal to the service server 400.

In operation 1207, upon receiving the control signal from the second display device 200, the service server 400 may transmit the received control signal to the first display device 100.

In operation 1208, upon receiving the control signal from the service server 400, the first display device 100 may transmit the received control signal to the game server 300.

In operation 1209, the game server 300 may execute the game application, based on the control signal received from the first display device 100, and obtain a game screen according to a result of the execution.

In operation 1210, the game server 300 may transmit the game screen to the first display device 100.

In operation 1211, the first display device 100 may display, on the display 120, the game screen received from the game server 300. According to such an operation, the first user may view, on the first display device 100, a screen in which the game is controlled by the second user.

In operation 1212, the first display device 100 may transmit the game screen to the service server 400.

In operation 1213, the service server 400 may transmit the game screen received from the first display device 100 to the second display device 200.

In operation 1214, the second display device 200 may display, on the display 220, the game screen received from the service server 400.

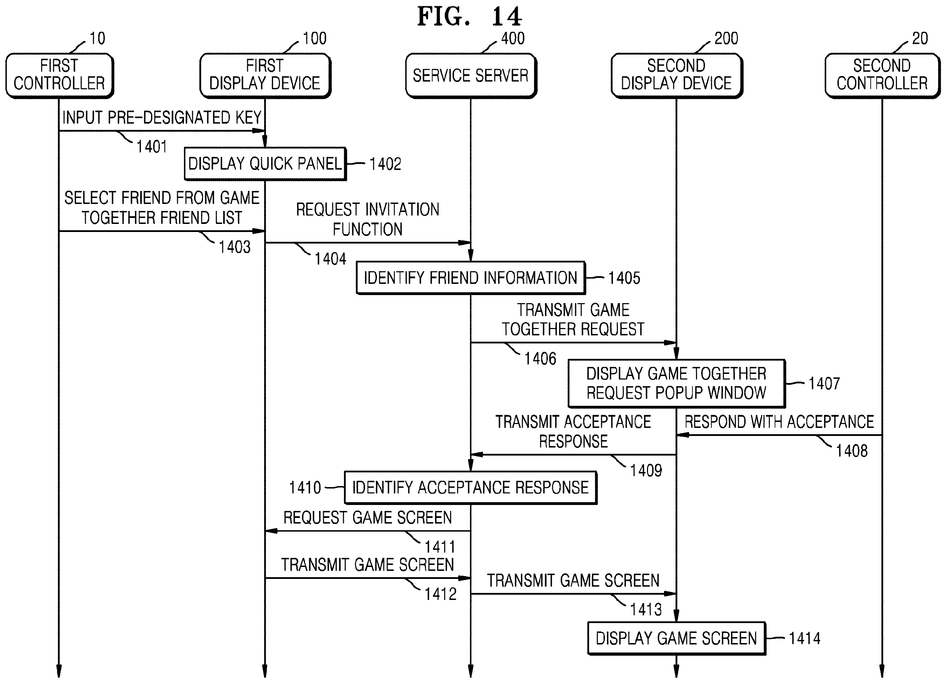

FIG. 14 is a signal flow diagram illustrating an example method by which the first display device 100 invites the second user participate in a game being played by the first user, using a friend list, according to various embodiments.

Referring to FIG. 14, in operation 1401, the first display device 100 may receive, from the first controller 10, a signal corresponding to an input of a pre-determined key.

According to an embodiment of the disclosure, the first user of the first display device 100 may display a quick panel by pressing the pre-determined key of the first controller 10 when the first user wants to invite another user participate in game play while playing a game according to a game application executed through the game server 300. The first controller 10 may transmit, to the first display device 100, the signal corresponding to the input of the pre-determined key, according to the input of pressing the pre-determined key. For example, the first user may press a home key in the first controller 10 as the pre-determined key.

In operation 1402, the first display device 100 may display the quick panel according to the input of the pre-determined key, received from the first controller 10. The quick panel has been described above with reference to FIG. 9.

In operation 1403, the first display device 100 may receive, from the first controller 10, a signal of selecting one friend from a friend list item.

According to an embodiment of the disclosure, the first user may select, using the first controller 10, one friend, for example, the item 1111 indicating the second user, from among friends included in the friend list item 973 that is a lower item of the game together item 970 in the quick panel 900 shown in FIG. 11. The first controller 10 may transmit, to the first display device 100, a signal indicating that the item 1111 indicating the second user has been selected.

In operation 1404, the first display device 100 may transmit, to the service server 400, the second user as friend information to be participated in game play.

In operation 1405, the service server 400 may identify information about the second user, received from the first display device 100.

In operation 1406, the service server 400 may transmit a game together request to the second display device 200 of the identified second user.

In operation 1407, the second display device 200 may display a game together request popup window according to the game together request received from the service server 400.

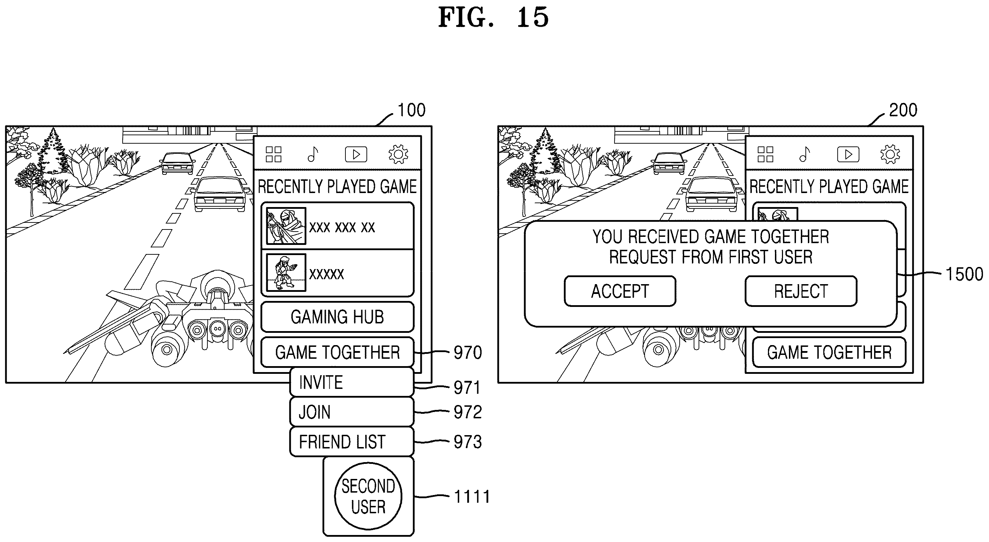

FIG. 15 is a diagram illustrating an example of the game together request popup window, according to various embodiments.

Referring to FIG. 15, when the first user wants to invite the second user participate in game play while playing a game application of the game server 300 through the first display device 100, the first user may select the item 1111 indicating the second user from among friends displayed in the friend list item 973 that is a lower item of the game together item 970 provided on the quick panel 900.

Such a selection of the item 1111 indicating the second user may be transmitted to the service server 400, and the service server 400 may transmit a game together request to the second display device 200 of the second user. Then, the second display device 200 may output a game together popup window 1500 according to the game together request of the service server 400. The second display device 200 may overlay the game together popup window 1500 on a content screen being displayed. The game together popup window 1500 may include an <accept> item and a <reject> item together with a message <You received game together request from first user>. When the <reject> item is selected by the second user, the second display device 200 may ignore the game together request and maintain displaying a content screen being currently displayed. When the <accept> item is selected by the second user, the second display device 200 may transmit, to the service server 400, a response indicating acceptance.

In operation 1408, the second user of the second display device 200 may select the <accept> item using the second controller 20 and the second controller 20 may transmit a signal indicating the acceptance to the second display device 200.

In operation 1409, upon receiving a signal indicating an acceptance response from the second controller 20, the second display device 200 may transmit the same to the service server 400.

In operation 1410, the service server 400 may identify the acceptance response of the second user according to the signal indicating the acceptance response, received from the second display device 200.

When the acceptance response of the second user is identified as such, the service server 400 may request the first display device 100 to transmit a game screen, in operation 1411.

In operation 1412, the first display device 100 may transmit, to the service server 400, a game screen output by the first display device 100, according to the request of the service server 400.

In operation 1413, the service server 400 may transmit the game screen received from the first display device 100 to the second display device 200.

In operation 1414, the second display device 200 may display the game screen received from the service server 400. A screen sharing operation is completed between the first display device 100 and the second display device 200 through operations 1411 to 1414, and thus, the second user may view and control execution of a cloud game being played in the first display device 100 of the first user, through the second display device 200 of the second user.

In FIG. 14, it is illustrated that the input of the pre-determined key and the selecting of the friend are transmitted by the first controller 10, but the disclosure is not limited thereto, and the request or the selecting may be transmitted by a remote controller for controlling the first display device 100.

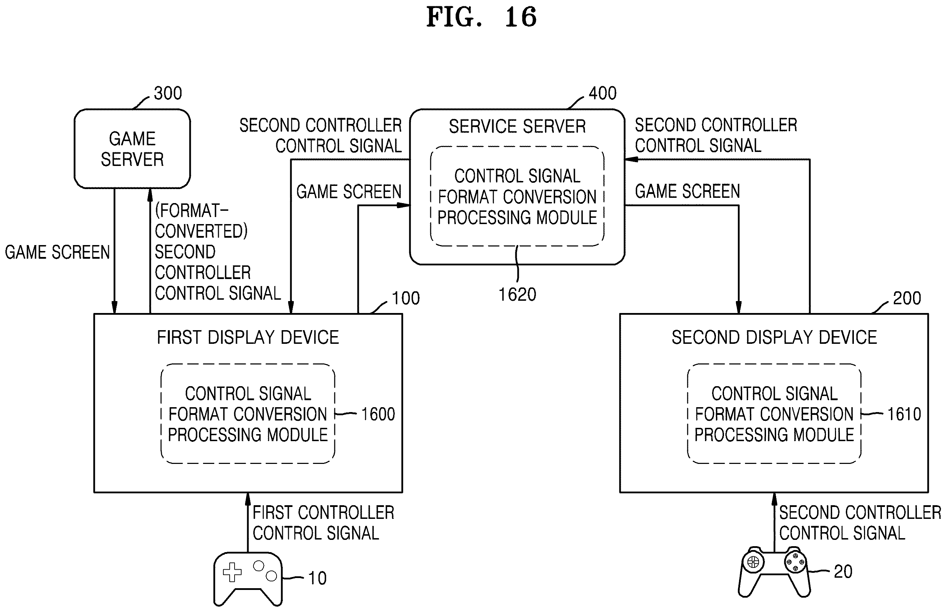

FIG. 16 is a diagram illustrating an example method of processing a format of a control signal, according to various embodiments.

According to an embodiment of the disclosure, the first user may want to invite the second user participate and enable the second user to play a game application, while playing the game application through the game server 300. However, a control signal output by the second controller 20 used by the second user and a control signal output by the first controller 10 may have different formats. For example, the formats of the control signals may be different from each other when the second controller 20 and the first controller 10 are manufactured by different manufacturers or are manufactured by a same manufacturer but have different versions. In this case, when the control signal of the second controller 20 is transmitted to the game server 300 as is, the game server 300 fails to interpret the control signal of the second controller 20, and thus, the game application may not be executed. Accordingly, when the formats of the control signals of the first controller 10 and the second controller 20 are different from each other, control signal format conversion processing may need to be performed.

Referring to FIG. 16, according to an embodiment of the disclosure, the first display device 100 may include a control signal format conversion processing module (e.g., including various circuitry and/or executable program instructions) 1600.

According to an embodiment of the disclosure, the control signal format conversion processing module 1600 may determine whether the format of the control signal of the first controller 10 and the format of the control signal of the second controller 20 are compatible, and when it is determined that the formats are compatible, transmit the control signal of the second controller 20 as is. On the other hand, when it is determined that the formats are not compatible, the format of the control signal of the second controller 20 is converted into the format of the control signal of the first controller 10, and the format-converted control signal may be transmitted to the game server 300.

According to an embodiment of the disclosure, the control signal format conversion processing module 1600 may determine whether the format of the control signal of the first controller 10 and the format of the control signal of the second controller 20 are compatible using information about a type of a control signal, information about a controller type, or the like. For example, the control signal format conversion processing module 1600 may determine that the format of the control signal of the first controller 10 and the format of the control signal of the second controller 20 are compatible when a type of the control signal of the first controller 10 and a type of the control signal of the second controller 20 are the same. For example, the control signal format conversion processing module 1600 may determine that the format of the control signal of the first controller 10 and the format of the control signal of the second controller 20 are compatible when a type of the first controller 10 and a type of the second controller 20 are the same.

According to an embodiment of the disclosure, the control signal format conversion processing module 1600 may convert a format of a control signal using a control signal format conversion table.

In the example of FIG. 16, it has been described under the assumption that the control signal of the first controller 10 has a format interpretable by the game application executed by the game server 300. However, the control signal of the first controller 10 may not have a format that is interpretable by the game application executed by the game server 300. In this case, the first display device 100 may convert the format of the control signal received from the first controller 10 into a format that is interpretable by the game application. Also, the first display device 100 may convert the format of the control signal received from the second display device 200 into a format that is interpretable by the game application. In other words, the first display device 100 may identify whether the format of the control signal received from the second display device 200 is compatible with the game application. When it is determined that the format of the control signal received from the second display device 200 is compatible with the game application, the first display device 100 may transmit the control signal from the second display device 200 to the game server 300 as is. When it is determined that the format of the control signal received from the second display device 200 is not compatible with the game application, the first display device 100 may convert the format of the control signal received from the second display device 200 into a format compatible with the game application and transmit the same to the game server 300. For example, the first display device 100 may store a table in which a compatible format identifier of a control signal or a compatible controller identifier is mapped to an identifier of each game application. The first display device 100 may identify whether the format of the control signal received from the second display device 200 is compatible with the game application using such a table.

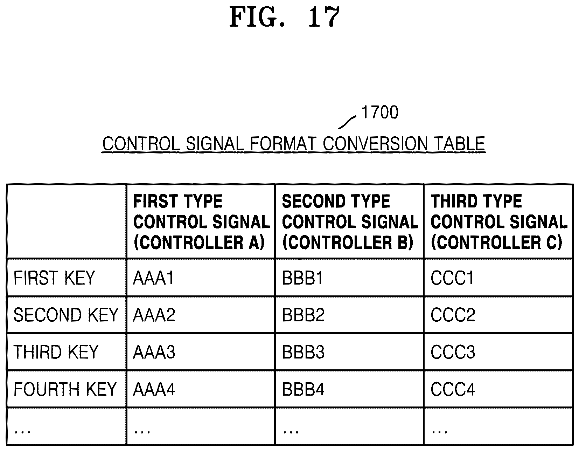

FIG. 17 is a diagram illustrating an example of a control signal format conversion table 1700 according to various embodiments.

Referring to FIG. 17, the control signal format conversion table 1700 is a table in which a corresponding key value is mapped to various controllers. For example, second type control signals BBB1, BBB2, BBB3, and BBB4 output by a controller B and third type control signals CCC1, CCC2, CCC3, and CCC4 output by a controller C are mapped respectively to first type control signals AAA1, AAA2, AAA3, and AAA4 output by a controller A. Thus, for example, when a value of the control signal of the second controller 20 is CCC1 and a type of the first controller 10 is the controller A, the control signal format conversion processing module 1600 may convert CCC1 into AAA1 and transmit the same to the game server 300.

According to an embodiment of the disclosure, the second display device 200 may include a control signal format conversion processing module 1610.

According to an embodiment of the disclosure, the control signal format conversion processing module 1610 included in the second display device 200 may determine whether the format of the control signal of the first controller 10 and the format of the control signal of the second controller 20 are compatible, and when it is determined that the formats are compatible, transmit the control signal of the second controller 20 to the service server 400 as is. On the other hand, when it is determined that the formats are not compatible, the format of the control signal of the second controller 20 is converted into the format of the control signal of the first controller 10, and the format-converted control signal may be transmitted to the service server 400. When it is difficult to obtain information about the format of the control signal of the first controller 10, the control signal format conversion processing module 1610 may identify a format of a control signal usable in the game application, based on metadata about the game application.

According to an embodiment of the disclosure, the service server 400 may include a control signal format conversion processing module 1620.

According to an embodiment of the disclosure, the control signal format conversion processing module 1620 included in the service server 400 may determine whether the format of the control signal of the first controller 10 and the format of the control signal of the second controller 20 are compatible, and when it is determined that the formats are compatible, transmit the control signal of the second controller 20 to the first display device 100 as is. On the other hand, when it is determined that the formats are not compatible, the format of the control signal of the second controller 20 is converted into the format of the control signal of the first controller 10, and the format-converted control signal may be transmitted to the first display device 100. When it is difficult to obtain information about the format of the control signal of the first controller 10, the control signal format conversion processing module 1620 may identify a format of a control signal usable in the game application, based on the metadata about the game application.

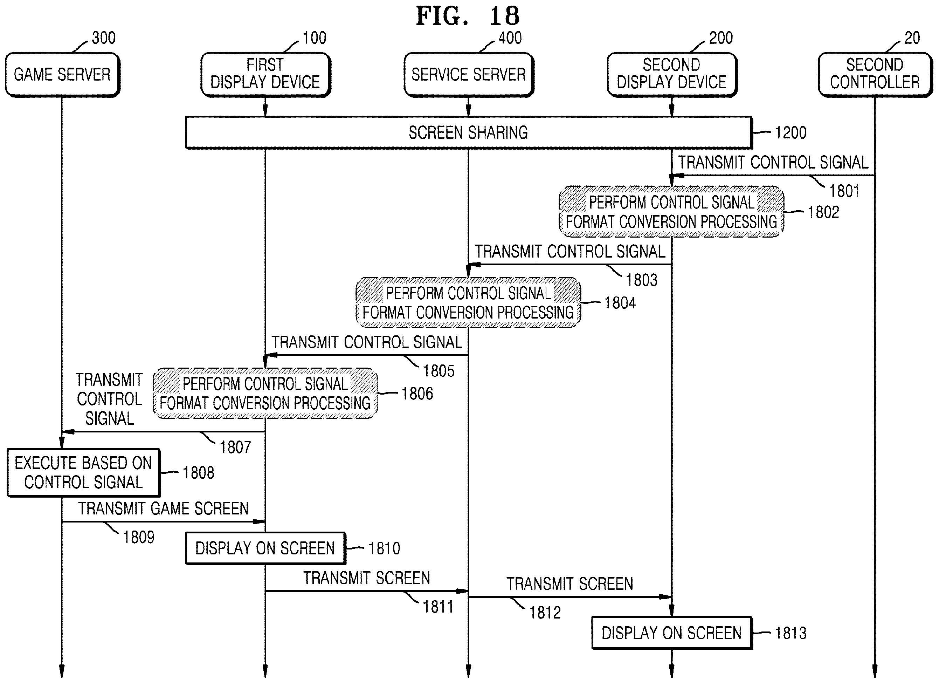

FIG. 18 is a signal flow diagram illustrating an example method of processing a format of a control signal, according to various embodiments.

Referring to FIG. 18, in operation 1200, a screen sharing operation is completed between the first display device 100 and the second display device 200, and thus, the second user may view and control execution of a cloud game being played in the first display device 100 of the first user, through the second display device 200 of the second user.

In operation 1801, the second user of the second display device 200 may manipulate an input of controlling a game application using the second controller 20, and accordingly, the second controller 20 may transmit, to the second display device 200, a control signal corresponding to the manipulation.

In operation 1802, the second display device 200 that has received the control signal from the second controller 20 may determine whether a format of the control signal of the second controller 20 is compatible with a format of a control signal of the first controller 10, and when it is determined that the formats are not compatible, perform control signal format conversion processing. As described above with reference to FIG. 16, the control signal format conversion processing may be performed by the control signal format conversion processing module 1610.

In operation 1803, the second display device 200 may transmit the control signal to the service server 400. Here, the control signal transmitted to the service server 400 may be the format-converted control signal or the control signal from the second controller 20, depending on the compatibility.

In operation 1804, the service server 400 that has received the control signal from the second display device 200 may determine whether the format of the control signal of the second controller 20 is compatible with the format of the control signal of the first controller 10, and when it is determined that the formats are not compatible, perform control signal format conversion processing. As described above with reference to FIG. 16, the control signal format conversion processing may be performed by the control signal format conversion processing module 1620.

In operation 1805, the service server 400 may transmit the control signal to the first display device 100. Here, the control signal transmitted to the first display device 100 may be the format-converted control signal or the control signal from the second controller 20, depending on the compatibility.

In operation 1806, the first display device 100 that has received the control signal from the service server 400 may determine whether the format of the control signal of the second controller 20 is compatible with the format of the control signal of the first controller 10, and when it is determined that the formats are not compatible, perform control signal format conversion processing. As described above with reference to FIG. 16, the control signal format conversion processing may be performed by the control signal format conversion processing module 1600.

In operation 1807, the first display device 100 may transmit the control signal to the game server 300. Here, the control signal transmitted to the game server 300 may be the format-converted control signal or the control signal from the second controller 20, depending on the compatibility.

In operation 1808, the game server 300 may execute the game application, based on the control signal received from the first display device 100, and obtain a game screen according to a result of the execution.

In operation 1809, the game server 300 may transmit the game screen to the first display device 100.

In operation 1810, the first display device 100 may display, on the display 120, the game screen received from the game server 300. According to such an operation, the first user may view, on the first display device 100, a screen in which the game is controlled by the second user.

In operation 1811, the first display device 100 may transmit the game screen to the service server 400.

In operation 1812, the service server 400 may transmit the game screen received from the first display device 100 to the second display device 200.

In operation 1813, the second display device 200 may display, on the display 220, the game screen received from the service server 400.

In the signal flow diagram of FIG. 18, the control signal format conversion processing performed by the first display device 100, the second display device 200, and the service server 400 are not required to be performed by all three devices, and may be sufficient enough to be performed by at least one of the devices.

According to an embodiment of the disclosure, there are a plurality of users to control game play according to game screen sharing, and thus, game control authority may be provided between the plurality of users. For example, there may be case where only a user who initially started the game play is able to control a game, only a friend who is made to participate in the game play is able to control the game, or some of users who participated in the game play are able to control the game.

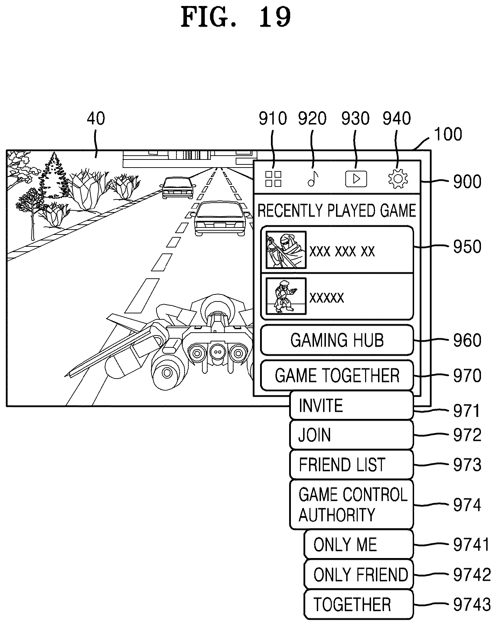

FIG. 19 is a diagram illustrating example game control authority according to various embodiments.

Referring to FIG. 19, a game control authority item 974 may be included as a lower item of the game together item 970 of the quick panel 900.

Also, an only me item 9741, an only friend item 9742, and a together item 9743 may be included as lower items of the game control authority item 974.

The only me item 9741 indicates an item in which only the first user who initially started game play has game control authority. When the only me item 9741 is selected, the first display device 100 may provide only the control signal of the first controller 10 to the game server 300 despite of a game together situation.

The only friend item 9742 indicates an item in which only the second user who is made to participate in the game play has game control authority. When the only friend item 9742 is selected, the first display device 100 may transmit, to the game server 300, the control signal of the second controller 20 received from the second display device 200.

The together item 9743 indicates an item in which both the first user and the second user have game control authority. When the together item 9743 is selected, the first display device 100 may provide, to the game server 300, the control signal of the second controller 20 received from the second display device 200 and the control signal of the first controller 10 together. For example, the together item 9743 may be used in a type of a game where a plurality of users control manipulation in one game.

According to an embodiment of the disclosure, users participated for game play through game screen sharing may want to talk with each other. In this regard, a quick panel may provide a video chatting function or a voice chatting function.

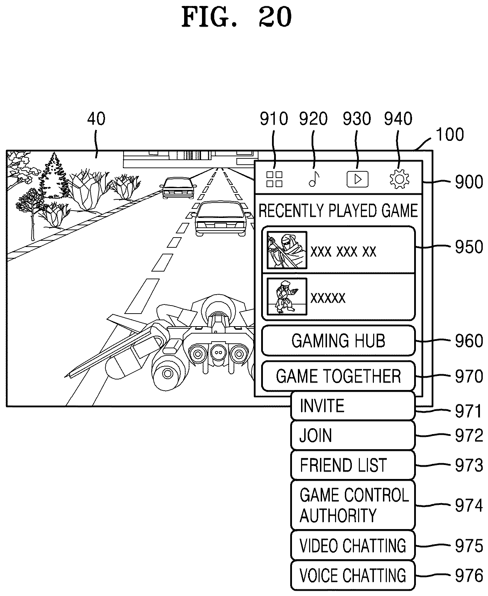

FIG. 20 is a diagram illustrating example video chatting/voice chatting function according to various embodiments.

Referring to FIG. 20, a video chatting item 975 and a voice chatting item 976 may be further included as lower items of the game together item 970 of the quick panel 900.

The video chatting item 975 is an item that enables the first user and the second user to have a video call while playing a game together through screen sharing.

The voice chatting item 976 is an item that enables the first user and the second user to have a voice call while playing a game together through screen sharing.

As described above, the service server 400 has generated a friend group relationship between the first user and the second user for a game together function, and thus, the service server 400 may manage and control a video call function or a voice call function using the friend group relationship.

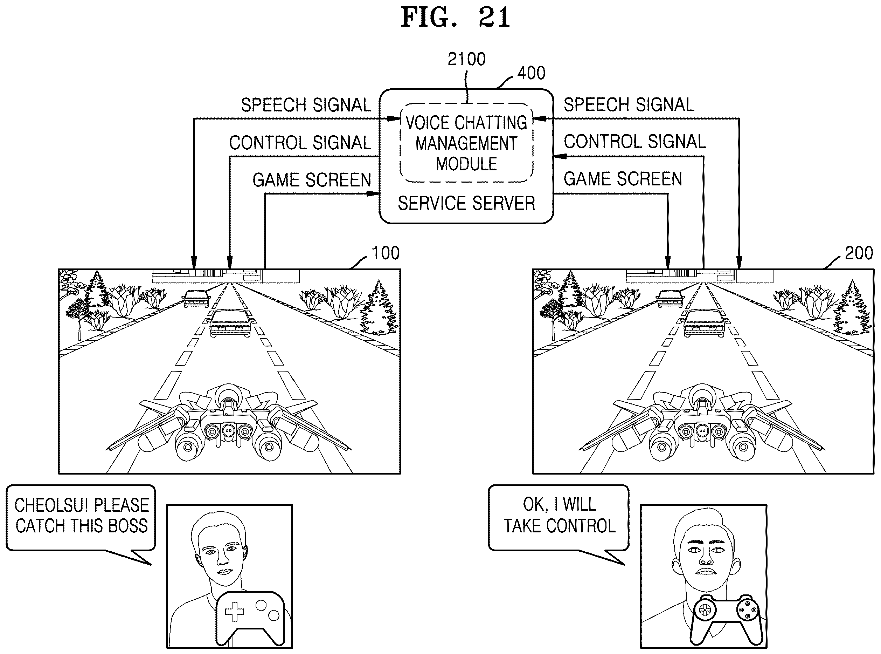

FIG. 21 is a diagram illustrating example voice call performed between users using a voice chatting function while playing a game using a game together function, according to various embodiments.

Referring to FIG. 21, a voice chatting operation may be performed between the first display device 100 and the second display device 200 according to a request of one of the first user and the second user during the game play using the game together function.

The service server 400 may include a voice chatting management module 2100 for implementing the voice chatting operation between the first display device 100 and the second display device 200.

The voice chatting management module 2100 may include various circuitry and/or executable program instructions and receive a speech signal of the first user from the first display device 100 and transmit the same to the second display device 200, and receive a speech signal of the second user from the second display device 200 and transmit the same to the first display device 100. As such, by providing the voice chatting operation during the game play, conversation between the first user and the second user may be facilitated and execution of a game may be easily controlled during the game play.

For example, when the first user inputs a speech <Cheolsu! Please catch this boss> using a microphone of the first display device 100, a Bluetooth audio input device (e.g., a Bluetooth headset) connected to the first display device 100, or the like, the first display device 100 may transmit an input speech signal to the service server 400 and the service server 400 may transmit the received speech signal to the second display device 200. Then, the second display device 200 may output the received speech signal using a speaker or a Bluetooth audio output device (e.g., a Bluetooth headset) connected to the second display device 200 such that the second user may listen to speech content of the first user. When the second user inputs a speech <OK, I will take control> using a microphone of the second display device 200 or a Bluetooth audio input device (e.g., the Bluetooth headset) connected to the second display device 200, in response to the speech content of the first user, the second display device 200 may transmit an input speech signal to the service server 400 and the service server 400 may transmit the received speech signal to the first display device 100. Then, the first display device 100 may output the received speech signal using a speaker or a Bluetooth audio output device (e.g., the Bluetooth headset) connected to the first display device 100 such that the first user may listen to speech content of the second user. As such, communication for controlling the execution of the game may be facilitated using the voice chatting function while a plurality of users play a cloud game using the game together function.

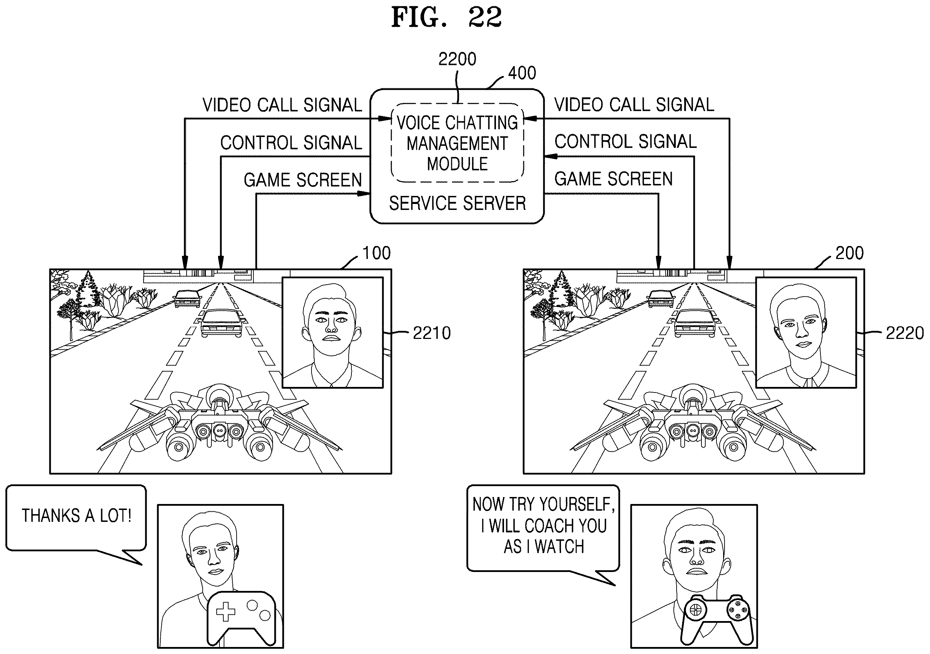

FIG. 22 is a diagram illustrating an example voice call performed between users using a video chatting function while playing a game using a game together function, according to various embodiments.

Referring to FIG. 22, a video chatting operation may be performed between the first display device 100 and the second display device 200 according to a request of one of the first user and the second user during the game play using the game together function.

The service server 400 may include a video chatting management module 2200 including various circuitry and/or executable program instructions for implementing the video chatting operation between the first display device 100 and the second display device 200.

The video chatting management module 2200 may receive a speech signal of the first user and an image signal obtained by photographing the first user from the first display device 100 and transmit the same to the second display device 200, and receive a speech signal of the second user and an image signal obtained by photographing the second user from the second display device 200 and transmit the same to the first display device 100. As such, by providing the video chatting operation during the game play, conversation between the first user and the second user may be facilitated and execution of a game may be easily controlled during the game play.

For example, the first display device 100 may obtain a speech signal of the first user <Thanks a lot!> using the microphone of the first display device 100 or the Bluetooth audio input device (e.g., the Bluetooth headset) connected to the first display device 100, and obtain an image of the first user using a camera embedded in the first display device 100 or a camera connected to the first display device 100 wirelessly or via wires. The first display device 100 may transmit the input speech signal and image signal to the service server 400, and the service server 400 may transmit the received speech signal and image signal to the second display device 200. Then, the second display device 200 may output the received speech signal using the speaker or the Bluetooth audio output device (e.g., the Bluetooth headset) connected to the second display device 200 such that the second user may listen to speech content of the first user. Also, the second display device 200 may display an image 2220 of the first user on at least a portion of the display 220 using the received image signal.

When the second user inputs a speech <Now try yourself, I will coach you as I watch> using the microphone of the second display device 200 or the Bluetooth audio input device (e.g., the Bluetooth headset) connected to the second display device 200, in response to the speech content of the first user, the second display device 200 may receive a speech signal of the second user. Also, the second display device 200 may obtain an image of the second user using a camera embedded in the second display device 200 or a camera connected to the second display device 200 wirelessly or via wires. The second display device 200 may transmit the input speech signal and image signal to the service server 400, and the service server 400 may transmit the received speech signal and image signal to the first display device 100. Then, the first display device 100 may output the received speech signal using the speaker or the Bluetooth audio output device (e.g., the Bluetooth headset) connected to the first display device 100 such that the first user may listen to speech content of the second user. Also, the first display device 100 may display an image 2210 of the second user on at least a portion of the display 120 using the received image signal.

In an embodiment of the disclosure, it has been described that a game screen, a control signal, and speech/image signal are exchanged between the first display device 100 and the second display device 200 through the service server 400. However, the disclosure is not limited thereto, and when the first display device 100 and the second display device 200 are within a short-range communicable range, a game screen may be shared and a control signal may be exchanged using a device-to-device (D2D) communication method. For example, when the first user and the second user are in different rooms at home, the D2D communication method may be used.

The D2D communication method may refer, for example, to a communication technology enabling to or more devices to directly communicate with each other without assistance of an intermediate network or infrastructure. In other words, the D2D communication method may enable devices to directly exchange data and information with each other using a wireless communication technology, such as Bluetooth, Wi-Fi direct, or near field communication (NFC). For example, Wi-Fi direct is a technology that enable two devices to directly connect to each other without intervention of a general access point or router. The Wi-Fi direct may enable pieces of data, files, stream media, or other services to be shared without a network connection or Internet access.

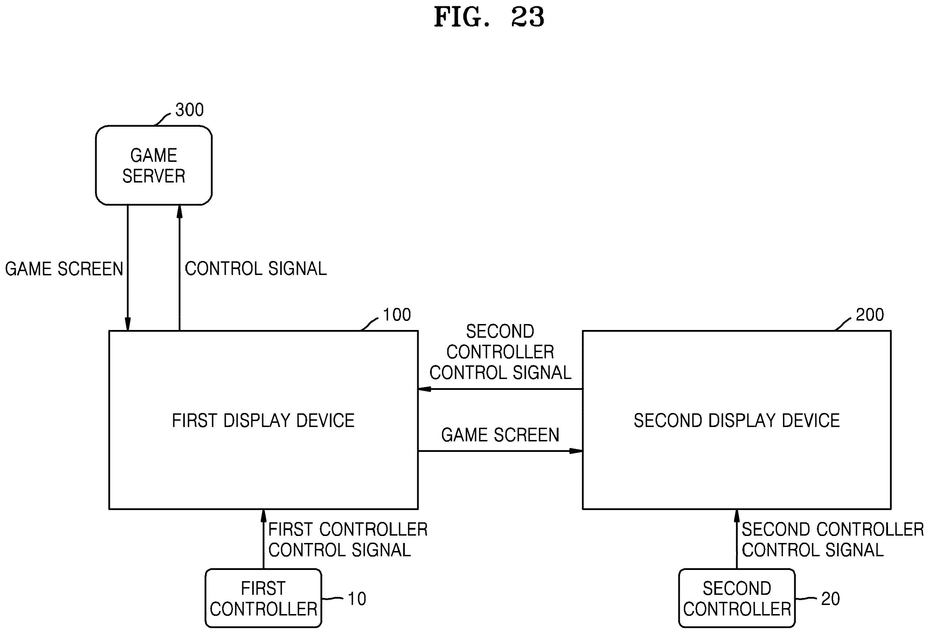

FIG. 23 is a diagram illustrating an example method of playing a game between the first display device 100 and the second display device 200 using a Wi-Fi direct technology, according to various embodiments.

Referring to FIG. 23, the first display device 100 and the second display device 200 may communicably connect to each other directly using the Wi-Fi direct technology, without intervention of a service server.

The first display device 100 may directly transmit a game screen to the second display device 200 using Wi-Fi direct communication, and the second display device 200 may display the game screen. The second display device 200 may directly transmit a control signal of the second controller 20 to the first display device 100 using Wi-Fi direct communication, and the first display device 100 may transmit the received control signal to the game server 300.

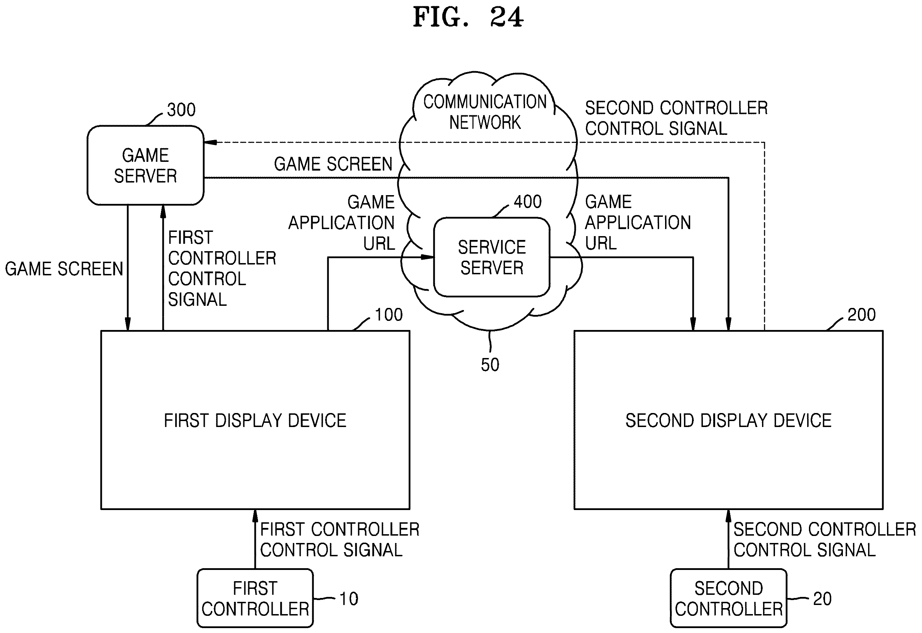

FIG. 24 is a diagram illustrating an example method of transmitting a screen of a game being executed in the game server 300 directly to the second display device 200 and transmitting a control signal of the second display device 200 directly to the game server 300, according to various embodiments.

According to characteristics of a game application in which an immediate response is important in response to a game execution control input, when a game screen and a control signal are transmitted/received through the service server 400, a delay may occur in displaying a screen output in response to the game execution control input.

Thus, according to an embodiment of the disclosure, the first display device 100 may provide, to the second display device 200, a URL enabling the game application executed by the game server 300 to be directly accessed, and the second display device 200 may receive a game screen by directly accessing the game server 300 using the received URL and transmit a control signal directly to the game server 300.

Referring to FIG. 24, the first display device 100 may transmit, to the service server 400, the URL for accessing the game application being executed in the game server 300, for game screen sharing with the second display device 200 of the second user.

The service server 400 may transmit the game application URL to the second display device 200, and the second display device 200 may directly access the game server 300 using the received game application URL to request the game server 300 to transmit the game screen of the game application being executed.

Accordingly, the game server 300 may transmit the requested game screen to the second display device 200, and the second display device 200 may display the received game screen and transmit a control signal for controlling execution of the game application to the game server 300.

The game server 300 may transmit, to both the first display device 100 and the second display device 200, a game screen obtained as a result of executing the game application, based on the control signal received from the second display device 200.

In FIG. 24, an example in which the game application URL is transmitted through the service server 400 has been described, but an embodiment of the disclosure are not limited thereto, and the game application URL may be transmitted between the first display device 100 and the second display device 200 through D2D communication.

Also, according to an embodiment of the disclosure, the second display device 200 may access the game server 300 using the game application URL to directly receive the game screen from the game server 300 through streaming, and the control signal for controlling the game application may be transmitted to the game server 300 through the service server 400 and through the first display device 100.

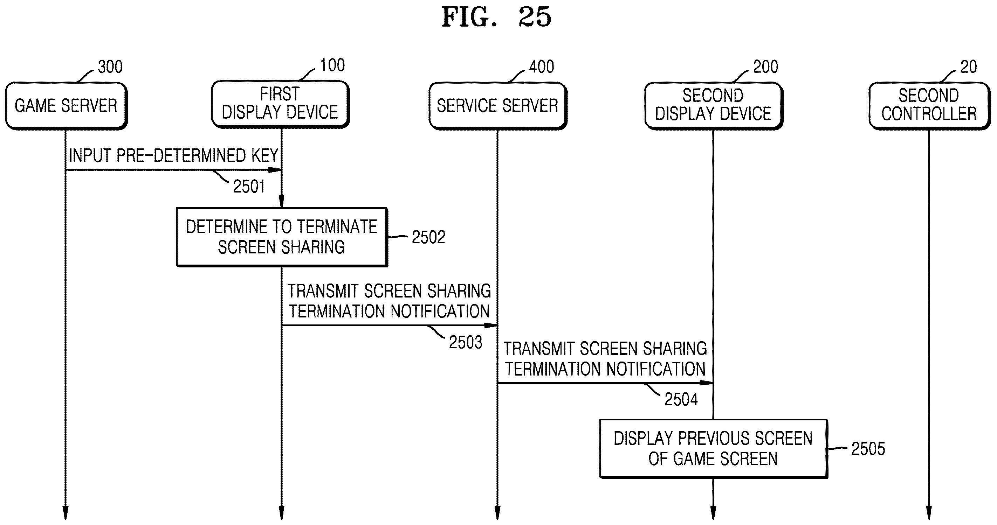

FIG. 25 is a signal flow diagram illustrating an example method of terminating a game together function, according to various embodiments.

Referring to FIG. 25, in operation 2501, the first display device 100 may receive, from the first controller 10, a signal corresponding to an input of a pre-determined key.

According to an embodiment of the disclosure, the first user of the first display device 100 may perform an input of pressing the pre-determined key of the first controller 10 when the first user wants to terminate the game together function. Here, the input of pressing the pre-determined key may include an input of pressing the pre-determined key for a long time. The first controller 10 may transmit, to the first display device 100, the signal corresponding to the input of the pre-determined key, according to the input of pressing the pre-determined key.

In operation 2502, the first display device 100 may determine to terminate screen sharing according to the input of the pre-determined key, received from the first controller 10.

In operation 2503, the first display device 100 may transmit a screen sharing termination notification to the service server 400.

In operation 2504, the service server 400 may receive the screen sharing termination notification and transmit the same to the second display device 200.

In operation 2505, upon receiving the screen sharing termination notification, the second display device 200 may display a screen that was displayed before receiving the game screen through the service server 400.

In FIG. 25, it has been described that the request to terminate the screen sharing is received according to a request of the first user, but the disclosure is not limited thereto. The request to terminate the screen sharing may be performed according to a request of the second user, and in this case, the request to terminate the screen sharing may be transmitted from the second display device 200 to the service server 400, and the service server 400 may transmit the request to terminate the screen sharing to the first display device 100. In any of cases of the request to terminate the screen sharing of the first user and the request to terminate the screen sharing of the second user, the game together function may not be used in the first display device 100 of the first user according to termination of the screen sharing, but outputting of the game screen may be maintained in the first display device 100.

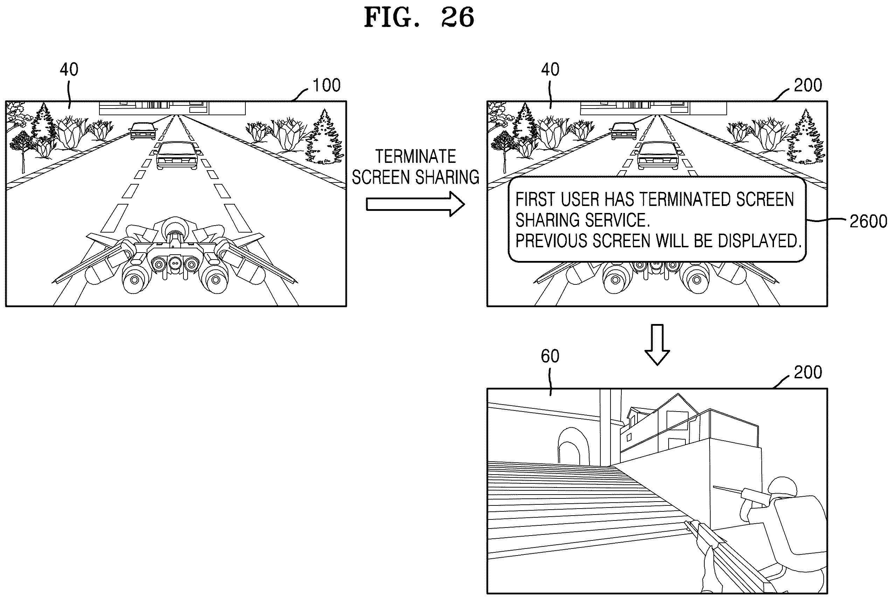

FIG. 26 is a diagram illustrating example game screen sharing termination between the first display device 100 and the second display device 200, according to various embodiments.

Referring to FIG. 26, when a request to terminate screen sharing is received from any one of the first user and the second user while the game screen 40 is displayed on the first display device 100 of the first user and the game together function is used by sharing the game screen 40 with the second display device 200 of the second user, the second display device 200 may stop outputting of the game screen 40 that has been received from the first display device 100 and output, and display the previous content screen 60 that was output from the first display device 100 before outputting of the game screen 40. In particular, when a screen sharing service is terminated according to a request of the first user, the second display device 200 may output a message 2600 <First user has terminated screen sharing service. Previous screen will be displayed> so as to prevent and/or avoid the second user from being confused due to a sudden change in a screen. Also, when the screen sharing service is terminated according to a request of the second user, the first display device 100 may output a message <Second user has terminated screen sharing service. Previous screen will be displayed> so as to notify the first user of a state of the second user and prevent and/or avoid the first user from being confused. As such, the request to terminate the screen sharing by the first user who started the screen sharing service, from among users participating in the screen sharing service, may be applied to all users participating in the screen sharing service. Accordingly, the screen sharing service is completely terminated, and to resume the screen sharing service, a friend needs to be invited again or the like.

Accordingly, the game together function is not used, but the outputting of the game screen is maintained in the first display device 100.

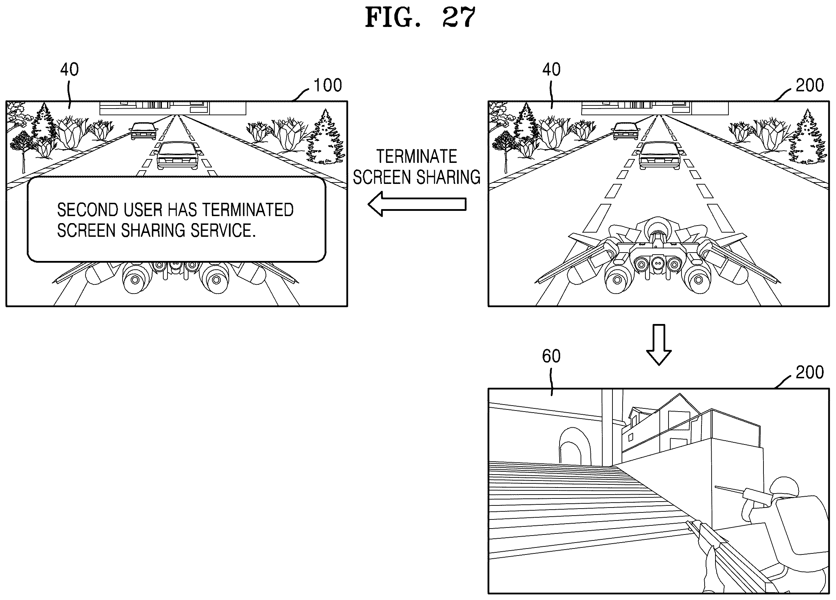

FIG. 27 is a diagram illustrating an example game screen sharing termination between the first display device 100 and the second display device 200, according to various embodiments.

Referring to FIG. 27, when a request to terminate screen sharing is received from any one of the first user and the second user while the game screen 40 is displayed on the first display device 100 of the first user and the game together function is used by sharing the game screen 40 with the second display device 200 of the second user, the second display device 200 may stop outputting of the game screen 40 that has been received from the first display device 100 and output, and display the previous content screen 60 that was output from the second display device 200 before outputting of the game screen 40. When the screen sharing service is terminated according to a request of the second user, the first display device 100 may output a message <Second user has terminated screen sharing service.> so as to notify the first user of a state of the second user and prevent and/or avoid the first user from being confused. As such, a request to terminate screen sharing by a user other than a user who started the screen sharing service, from among users participating in the screen sharing service, may be applied to terminate the screen sharing service only for the user who requested. For example, when there are three or more users participating in a screen sharing service, a request to terminate screen sharing by a second user instead of a first user who started the screen sharing service may be applied to terminate the screen sharing service of only the second user who requested, and thus, a screen is no longer shared with a display device of the second user, but the screen sharing service may be still maintained for a third user.

Various embodiments of the disclosure may also be realized in the form of a recording medium including instructions executable by a computer, such as a program module executed by a computer. A computer-readable medium may be an arbitrary available medium accessible by a computer, and includes all volatile and non-volatile media and separable and non-separable media. Further, the computer-readable recording medium may include a computer storage medium. Examples of the computer storage medium include all volatile and non-volatile media and separable and non-separable media, which have been implemented by an arbitrary method or technology, for storing information such as computer-readable instructions, data structures, program modules, and other data.

Various embodiments of the disclosure may be implemented as a software program that includes instructions stored on computer-readable storage media.

A computer is an apparatus capable of calling a stored instruction from a storage medium and operating according to an embodiment of the disclosure according to the called instruction, and may include an electronic device according to embodiments of the disclosure.

The computer-readable storage medium may be provided in the form of a non-transitory storage medium. The "non-transitory" storage medium does not include a signal and is tangible, and may not distinguish whether data is stored in the storage medium semi-permanently or temporarily.

Furthermore, a control method according to embodiments of the disclosure may be provided by being included in a computer program product. The computer program products are products that can be traded between sellers and buyers.

The computer program product may include a software program or a computer-readable storage medium storing a software program. For example, the computer program product may include a product (for example, a downloadable application) in a form of a software program that is electronically distributable through a manufacturer of a device or an electronic market (for example, Google PlayStore^{™} or AppStore^{™}). For electronic distribution, at least a part of the software program may be stored in the storage medium or temporarily generated. In this case, the storage medium may be a storage medium of a server of a manufacturer, a server of an electronic market, or a relay server that temporarily stores the software program.

The computer program product may include a storage medium of a server or a storage medium of a device, in a system including the server and the device. Alternatively, when there is a third device (e.g., a smartphone) that communicates with a server or a device, the computer program product may include a storage medium of the third device. Alternatively, the computer program product may include the software program transmitted from the server to the device or the third device, or transmitted from the third device to the device.

In this case, one of the server, the device, and the third device may perform a method according to embodiments of the disclosure by executing the computer program product. Alternatively, two or more of the server, the device, and the third device may perform the method according to embodiments of the disclosure in a distributed fashion by executing the computer program product.

For example, a server, for example, a cloud server or an artificial intelligence server, may execute the computer program product stored in the server to control the device communicatively connected to the server to perform the method according to embodiments of the disclosure.

In another example, the third device may execute the computer program product to control the device communicatively connected to the third device to perform the method according to an embodiment of the disclosure. When the third device executes the computer program product, the third device may download the computer program product from the server and execute the downloaded computer program product. Alternatively, the third device may execute a computer program product provided in a preloaded state to perform the method according to embodiments of the disclosure.

Furthermore, in the disclosure, the term "unit" may be a hardware component such as a processor or circuit and/or a software component that is executed by a hardware component such as a processor.

The above description of the disclosure is provided for illustration, and it will be understood by one of ordinary skill in the art that various changes in form and detail may be readily made therein without departing from the scope of the disclosure, including the following claims. Accordingly, embodiments of the disclosure described above are examples in all aspects and are not limited. For example, each element described as a single type may be implemented in a distributed manner, and similarly, elements described as distributed may be implemented in a combined form.

The scope of the disclosure includes the appended claims, and all changes or modifications within the scope of the appended claims and their equivalents will be understood as being included in the scope of the disclosure. It will also be understood that any of the embodiment(s) described herein may be used in conjunction with any other embodiment(s) described herein.

## Claims

1. A first display device 100 comprising:
a communication interface 110, comprising communication circuitry;
a memory 130 storing one or more instructions; and
at least one processor 140, comprising processing circuitry, configured to execute the one or more instructions stored in the memory, at least one processor, individually and/or collectively, configured to:
control the communication interface to transmit a request to execute a game application to a game server and receive a game screen according to the execution of the game application from the game server;
control a display to display the game screen;
control the communication interface to, according to an input designating a second user, transmit the game screen to a second display device corresponding to the second user by communicating with the second display device;
receive a control signal for controlling the game application from the second display device; and
control the communication interface to transmit the received control signal to the game server for the game server to control the game application, based on the control signal, and receive a game screen corresponding to a result of the controlling the game application from the game server.

2. The first display device of claim 1, wherein at least one processor 140, individually and/or collectively, is configured to:
provide a graphical user interface including an invitation function enabling designation of the second user; and
display an authentication number generated according to an input of selecting the invitation function.

3. The first display device of claim 2, wherein at least one processor 140, individually and/or collectively, is configured to provide the graphical user interface to a quick panel output according to reception of a specified key input.

4. The first display device of claim 3, wherein at least one processor 140, individually and/or collectively, is configured to:
receive, from a service server, a friend list including the second user corresponding to the second display device configured to join using the generated authentication number; and
control the display to display the friend list received from the service server.

5. The first display device of claim 1, wherein at least one processor 140, individually and/or collectively, is configured to:
provide a graphical user interface including a friend list; and
receive the input designating the second user by receiving an input of selecting the second user included in the friend list provided on the graphical user interface.

6. The first display device of any one of claims 1 to 4, wherein at least one processor 140, individually and/or collectively, is configured to:
perform communication with the second display device through the service server;
transmit the game screen to the second display device through the service server; and
receive the control signal from the second display device through the service server.

7. The first display device of any one of claims 1 to 4, wherein at least one processor 140, individually and/or collectively, is configured to:
control the communication interface to perform a direct communication connection with the second display device; and
control the communication interface to directly transmit the game screen to the second display device and directly receive the control signal from the second display device.

8. The first display device of claim 7, wherein at least one processor 140 is individually and/or collectively, configured to:
identify whether a format of a control signal received from the second display device is compatible with a format of a control signal of the first display device;
control the communication interface to transmit the control signal of the second display device as is to the game server, based on identifying that the format of the control signal of the second display device is compatible with the format of the control signal of the first display device; and
convert the format of the control signal of the second display device into the format of the control signal of the first display device and control the communication interface to transmit the format-converted control signal to the game server, based on identifying that the format of the control signal of the second display device is not compatible with the format of the control signal of the first display device.

9. The first display device of any one of claims 1 to 8, wherein at least one processor, individually and/or collectively, is configured to configure the graphical user interface to include a chatting function enabling voice chatting or video chatting with the second user.

10. A method of operating a first display device 100, the method comprising:
receiving, from a game server, a game screen according to execution of a game application, in response to a request to execute the game application being transmitted to the game server;
displaying the game screen;
transmitting the game screen to a second display device corresponding to the second user by communicating with the second display device, according to an input designating the second user;
receiving a control signal for controlling the game application from the second display device; and
transmitting the received control signal to the game server for the game server to control the game application, based on the control signal, and receiving a game screen corresponding to a result of controlling the game application from the game server.

11. The method of claim 10 further comprising:
providing a graphical user interface including an invitation function enabling designation of the second user; and
displaying an authentication number generated according to an input of selecting the invitation function.

12. The method of claim 11, further comprising providing the graphical user interface to a quick panel output according to reception of a specified key input.

13. The method of claim 12, further comprising:
receiving, from a service server, a friend list including the second user corresponding to the second display device that joins in using the generated authentication number; and
displaying the friend list received from the service server.

14. The method of claim 10, further comprising:
providing a graphical user interface including a friend list; and
receiving the input of designating the second user by receiving an input of selecting the second user included in the friend list provided on the graphical user interface.

15. A non-transitory computer-readable recording medium having recorded thereon one or more instructions executable by a processor of a display device to implement an operating method of a first display device, wherein the operating method comprises:
receiving, from a game server, a game screen according to execution of a game application, in response to a request to execute the game application being transmitted to the game server;
displaying the game screen;
transmitting the game screen to a second display device corresponding to the second user by communicating with the second display device, according to an input designating the second user;
receiving a control signal for controlling the game application from the second display device; and
transmitting the received control signal to the game server for the game server to control the game application, based on the control signal, and receiving a game screen corresponding to a result of controlling the game application from the game server.
